# EUROPEAN PATENT SPECIFICATION

(11) **EP 4 601 301 B1**
(45) Date of publication and mention of the grant of the patent: **25.11.2026**
(21) Application number: 24824736.3
(22) Date of filing: 27.12.2024
(51) Int. Cl.: H04N 21/43, H04N 21/436, H04N 21/4363, H04W 4/80, H04W 4/06

(54) **ELECTRONIC DEVICE FOR MANAGING BROADCAST SERVICE AND OPERATION METHOD THEREOF**
ELEKTRONISCHE VORRICHTUNG ZUR VERWALTUNG EINES RUNDFUNKDIENSTES UND BETRIEBSVERFAHREN DAFÜR
DISPOSITIF ÉLECTRONIQUE DE GESTION DE SERVICE DE DIFFUSION ET PROCÉDÉ DE FONCTIONNEMENT ASSOCIÉ

(30) Priority: 29.12.2023 KR 20230196463; 16.01.2024 KR 20240006935
(43) Date of publication of application: 13.08.2025
(73) Proprietor: Samsung Electronics Co., Ltd, Suwon-si, Gyeonggi-do 16677 (KR)
(72) Inventor: KIM, Sanghyeok, Suwon-si, Gyeonggi-do 16677 (KR); KIM, Sunjo, Suwon-si, Gyeonggi-do 16677 (KR); MOON, Youngsin, Suwon-si, Gyeonggi-do 16677 (KR); YOON, Heejae, Suwon-si, Gyeonggi-do 16677 (KR); JANG, Wonkyoung, Suwon-si, Gyeonggi-do 16677 (KR); CHEONG, Gupil, Suwon-si, Gyeonggi-do 16677 (KR); JIN, Juyeon, Suwon-si, Gyeonggi-do 16677 (KR); HAN, Euibum, Suwon-si, Gyeonggi-do 16677 (KR); KANG, Doosuk, Suwon-si, Gyeonggi-do 16677 (KR)
(74) Representative: Appleyard Lees IP LLP
(86) International application number: PCT/KR2024/021292
(87) International publication number: WO 2025/143880

(56) References cited:
- WO-A1-2020/096412
- CN-A- 112 260 778
- KR-A- 20230 022 735
- US-A1- 2022 322 209
- US-A1- 2023 269 012

## Description

### [Technical Field]

Embodiments of the disclosure relate to an electronic device managing a broadcast service and a method for operating the same.

### [Background Art]

Bluetooth communication technology may suggest a short-range wireless communication technology that enables electronic devices to be connected to each other for exchanging data or information. Bluetooth communication technology may have Bluetooth legacy (or classic) communication technology or Bluetooth low energy (BLE) communication technology and have various kinds of topology, such as piconet or scatternet.

Recently in wide use are electronic devices adopting Bluetooth communication technology. For example, a pair of earbuds that may be respectively worn on both ears of the user are widely used as an ear-wearable device. An ear-wearable device may provide various functions. For example, an ear-wearable device may include a microphone to identify the user's voice, thereby transmitting data for the user's voice to an electronic device (e.g., a smartphone). Further, the ear-wearable device may include a speaker to output the audio data received from an electronic device (e.g., a smartphone) to through the speaker.

The ear-wearable device may include a primary earbud (e.g., the right earbud) and a secondary earbud (e.g., the left earbud) that may be connected to an electronic device (e.g., a smart phone). The primary earbud may transmit voice data to the electronic device through connection with the electronic device, and the electronic device may transmit audio data (or audio content) to the primary earbud. The primary earbud may receive audio data (or audio content) from the electronic device through wireless communication and may output the audio data through the speaker. The secondary earbud may be synchronized with the primary earbud, outputting the audio data received from the electronic device through the speaker.

A wireless audio output device, such as an ear-wearable device or a Bluetooth speaker, may be connected to an external electronic device based on Bluetooth communication to perform the above-described operations. To that ends, the wireless audio output device may perform inquiry, inquiry scan, page, and page scan based on Bluetooth classic and/or perform BLE advertising and BLE scan based on BLE.

The BLE advertising may mean an operation for periodically broadcasting advertising data through an advertising physical channel, and the BLE scan may mean an operation for monitoring reception of the advertising data. US 2023/0269012 A1 describes an audio control method and device.

### [Disclosure of Disclosure]

### [Solution to Problems]

The invention is set out in the appended claims. An electronic device and a method for operating the same according to embodiments of the disclosure may receive a broadcast service.

The electronic device and method for operating the same according to embodiments of the disclosure perform scanning for resynchronizing a broadcast service when the synchronization of the broadcast service is terminated.

An electronic device according to an embodiment of the disclosure may comprise a communication circuit, at least one processor, and memory storing instructions. The instructions may, when executed by the at least one processor individually or collectively, cause the electronic device to: establish, through the communication circuitry, a first communication link with an external electronic device. The instructions may, when executed by the at least one processor individually or collectively, cause the electronic device to: transmit, to the external electronic device via the first communication link, first synchronization information for broadcast isochronous stream (BIS) synchronization to a source electronic device. The instructions may, when executed by the at least one processor individually or collectively, cause the electronic device to: determining that the BIS synchronization is terminated at the external electronic device synchronized with the source electronic device. The instructions may, when executed by the at least one processor individually or collectively, cause the electronic device to: based on the BIS synchronization being terminated at the external electronic device, perform, through the communication circuitry, scanning for receiving extended advertising (EA) data of the source electronic device. The instructions may, when executed by the at least one processor individually or collectively, cause the electronic device to: transmit, to the external electronic device via the first communication link, second synchronization information for the source electronic device obtained from the EA data, such that the external electronic device synchronizes with the source electronic device.

An electronic device according to an embodiment may comprise a communication circuit, at least one processor, and memory storing instructions. The instructions may, when executed by the at least one processor individually or collectively, cause the electronic device to: establish, through the communication circuitry, a first communication link with an external electronic device and transmit, to the external electronic device via the first communication link, first synchronization information for broadcast isochronous stream synchronization to a source electronic device. The instructions may, when executed by the at least one processor individually or collectively, cause the electronic device to: identify disconnection of the first communication link. The instructions may, when executed by the at least one processor individually or collectively, cause the electronic device to: based on the disconnection of the first communication link, perform, through the communication circuitry, scanning for receiving extended advertising (EA) data of the source electronic device. The instructions may, when executed by the at least one processor individually or collectively, cause the electronic device to: identify reconnection of the first communication link. The instructions may, when executed by the at least one processor individually or collectively, cause the electronic device to: based on the reconnection of the first communication link, transmit, to the external electronic device via the reconnected first communication link, second synchronization information for the source electronic device obtained from the EA data, such that the external electronic device synchronizes with the source electronic device.

A method by an electronic device according to an embodiment may comprise establishing a first communication link with an external electronic device. The method may comprise transmitting, to the external electronic device via the first communication link, first synchronization information for BIS synchronization to a source electronic device. The method may comprise determining that the BIS synchronization is terminated at the external electronic device synchronized with the source electronic device. The method may comprise, based on the BIS synchronization being terminated at the external electronic device, performing scanning for receiving extended advertising (EA) data of the source electronic device. The method may comprise transmitting, to the external electronic device via the first communication link, second synchronization information for the source electronic device obtained from the EA data, such that the external electronic device synchronizes with the source electronic device.

A method by an electronic device according to an embodiment may comprise establishing a first communication link with an external electronic device and transmitting, to the external electronic device via the first communication link, first synchronization information for BIS synchronization to a source electronic device. The method may comprise identifying disconnection of the first communication link. The method may comprise, based on the disconnection of the first communication link, performing scanning for receiving extended advertising (EA) data of the source electronic device. The method may comprise identifying reconnection of the first communication link. The method may comprise, based on the reconnection of the first communication link, transmitting, to the external electronic device via the reconnected first communication link, second synchronization information for the source electronic device obtained from the EA data, such that the external electronic device synchronizes with the source electronic device.

In a non-transitory computer-readable storage medium storing one or more programs, according to an embodiment, the one or more programs may include instructions configured to, when executed by at least one processor of an electronic device, cause the electronic device to: establish a first communication link with an external electronic device, transmit, to the external electronic device via the first communication link, first synchronization information for BIS synchronization to a source electronic device, determine that the BIS synchronization is terminated at the external electronic device synchronized with the source electronic device, based on the BIS synchronization being terminated at the external electronic device, perform scanning for receiving extended advertising (EA) data of the source electronic device, and transmit, to the external electronic device via the first communication link, second synchronization information for the source electronic device obtained from the EA data, such that the external electronic device synchronizes with the source electronic device.

### [Brief Description of the Drawings]

FIG. 1 is a view illustrating an electronic device in a network environment according to an embodiment;
FIG. 2 is a view illustrating connection between electronic devices based on short-range wireless communication according to an embodiment of the disclosure;
FIG. 3 is a view illustrating a configuration of an electronic device supporting short-range wireless communication according to an embodiment;
FIG. 4 is a view illustrating a circumstance in which an electronic device operates as an assistant of sink devices according to an embodiment of the disclosure;
FIG. 5 is a view illustrating an advertising operation for BIS according to an embodiment of the disclosure;
FIG. 6 is a view illustrating BIG information according to an embodiment of the disclosure;
FIG. 7 is a timing diagram illustrating reception of BIS data based on BIG parameters according to an embodiment of the disclosure;
FIG. 8 is a view illustrating an operation of performing a BIS scan when synchronization is terminated according to an embodiment of the disclosure;
FIG. 9 is a view illustrating an operation of performing a BIS scan when a first communication link is disconnected according to an embodiment of the disclosure;
FIG. 10 is a flowchart illustrating a procedure of performing a BIS scan when BIS synchronization is terminated according to an embodiment of the disclosure;
FIG. 11 is a flowchart illustrating a procedure of performing a BIS scan when BIS synchronization is terminated according to an embodiment of the disclosure;
FIG. 12 is a flowchart illustrating a procedure of displaying a UI when BIS synchronization is terminated according to an embodiment of the disclosure;
FIG. 13 is a flowchart illustrating a procedure of outputting a synchronization termination notification according to an embodiment of the disclosure;
FIG. 14 is a flowchart illustrating a procedure of performing a BIS scan when a first communication link is disconnected according to an embodiment of the disclosure;
FIG. 15 is a flowchart illustrating a procedure of receiving synchronization information through a reconnected first communication link according to an embodiment of the disclosure;
FIG. 16 is a sequence diagram illustrating a procedure of recovering BIS synchronization according to an embodiment of the disclosure;
FIG. 17 is a sequence diagram illustrating a procedure of recovering BIS synchronization when a first communication link is reconnected according to an embodiment of the disclosure;
FIG. 18 is a flowchart illustrating a procedure of synchronizing another sink device according to an embodiment of the disclosure; and
FIGS. 19A, 19B, 19C, 19D, and 19E are views illustrating examples of Uls according to an embodiment of the disclosure.

### [Mode for the Disclosure]

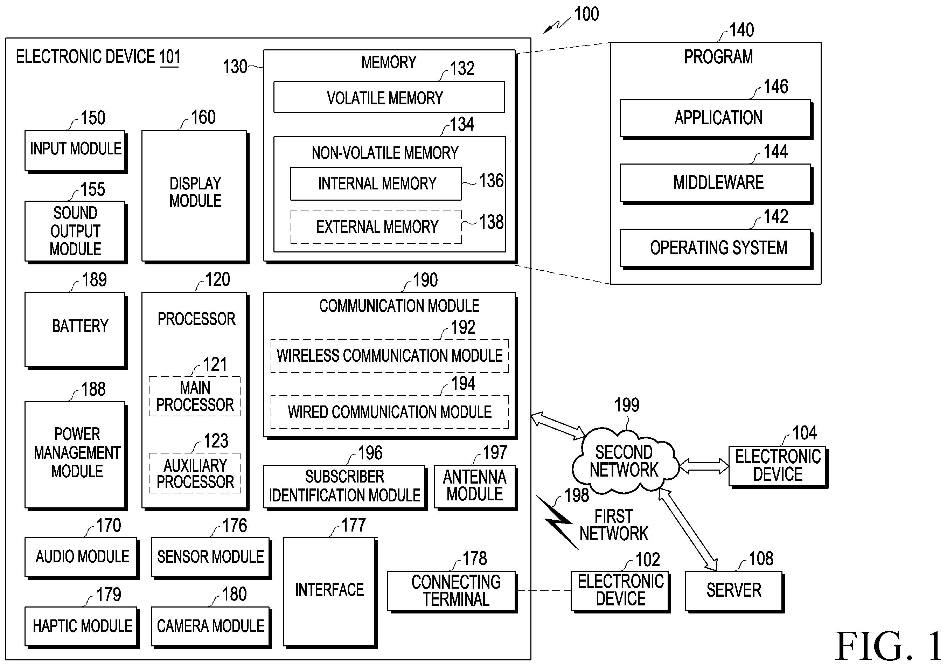

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or loT-related technology.

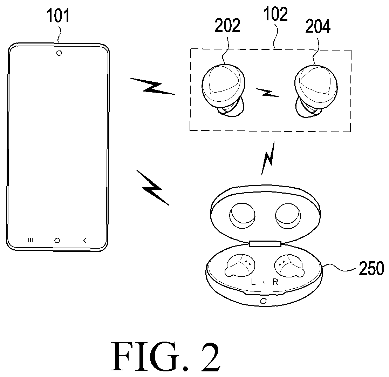

FIG. 2 is a view illustrating connection between electronic devices based on short-range wireless communication according to an embodiment of the disclosure.

Referring to FIG. 2, an electronic device (e.g., the electronic device 101) may be wirelessly connected to an external electronic device 102 (e.g., an ear-wearable device (ear-wearable device)). The electronic device 101 may be implemented as, e.g., a smart phone but, without limited to those described and/or shown, may be implemented as various types of devices (e.g., notebook computers including standard laptop computers, ultrabooks, or tab books, laptop computers, tablet computers, or desktop computers). The electronic device 101 may be implemented as shown in FIG. 1 and may thus include at least some of the components (e.g., various modules) shown in FIG. 1, and no duplicate description thereof is thus given below.

In an embodiment, the external electronic device 102 is a true wireless stereo (TWS) device, such as a binaural ear-wearable device, and may include at least one of a first electronic device 202 (e.g., a right earbud) and a second electronic device 204 (e.g., a left earbud). The electronic devices 202 and 204 may be implemented as wireless earbuds but, without limited to those described and/or shown, may be implemented as various types of devices (e.g., a smart watch, a head-mounted display device, or devices for measuring biometric signals (e.g., heartrate patch)) that supports an audio service as described below. According to an embodiment, when the electronic devices 202 and 204 are wireless earbuds, the first electronic device 202 and the second electronic device 204 may be a pair of devices (e.g., a right earbud and a left earbud). According to an embodiment, the first electronic device 202 and the second electronic device 204 may be implemented to include the same or similar components.

In an embodiment, the first electronic device 202 and the second electronic device 204 are shown as a pair of earbuds, but the first electronic device 202 and the second electronic device 204 may include devices operable as a pair or electronic devices (e.g., multi-channel speaker devices) operable as one combination. According to an embodiment, the first electronic device 202 and the second electronic device 204 may be implemented to include the same or similar components to each other.

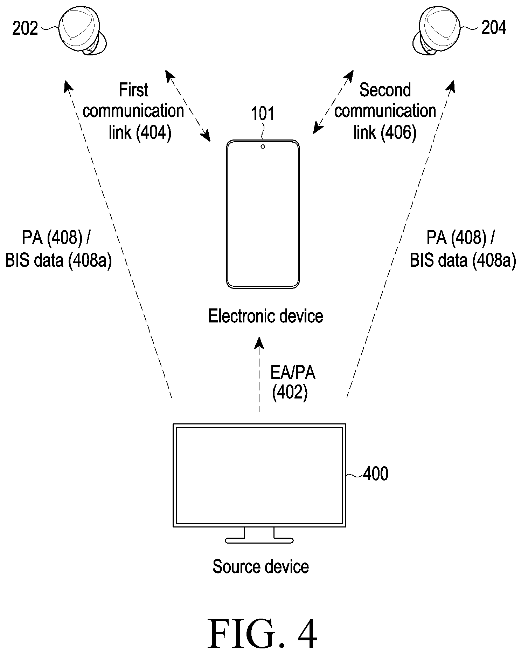

According to an embodiment, the electronic device 101 may establish a connection (e.g., the first communication link 404 or the second communication link 406 of FIG. 4) with at least one of the first electronic device 202 or the second electronic device 204 and transmit and/or receive data to/from each other. In an embodiment, the first communication link 404 and/or the second communication link 406 is operable to include a Bluetooth-based asynchronous connection-less (ACL) link.

In an embodiment, the electronic device 101 is operable to establish at least one communication link with at least one of the first electronic device 202 and the second electronic device 204 based on short-range wireless communication technology, such as at least one of Wi-Fi, Wi-Fi direct, or Bluetooth (e.g., Bluetooth classic or Bluetooth low energy (BLE)), or ultra-wideband (UWB). However, the scheme in which the electronic device 101 establishes a communication link with the first electronic device 202 and the second electronic device 204 is not limited to at least one of Wi-Fi, Bluetooth, or UWB.

In an embodiment, each of the electronic devices 202 and 204 is operable to use device-to-device (D2D) communication, such as Wi-Fi direct or Bluetooth, (e.g., using a communication circuit (e.g., the communication circuit 320) supporting the corresponding communication scheme) to establish a communication connection therebetween but, without limited thereto, may communicate with each other using other various types of communication (e.g., at least one of Wi-Fi communication using access points (APs), cellular communication using base stations, or wired communication).

In an embodiment, the electronic device 101 is operable to establish a communication link with only one of the first electronic device 202 or the second electronic device 204 or establish an individual communication link with each of the first electronic device 202 and the second electronic device 204.

In an embodiment, the electronic device 101 is operable to play a role as central, and the external electronic device 102 (e.g., at least one of the first electronic device 202 or the source electronic device 204) is operable to play a role as peripheral. In an audio service, the electronic device 101 operating as central may be a source electronic device, and the external electronic device 102 (e.g., the first electronic device 202 or the source electronic device 204) operating as peripheral may be a sink electronic device.

In an embodiment, the first electronic device 202 and the source electronic device 204 are operable to establish a communication link therebetween based on at least one of, e.g., Wi-Fi, Bluetooth, or UWB, but the scheme for establishing a communication link by the first electronic device 202 and the source electronic device 204 is not limited to at least one of Wi-Fi, Bluetooth, or UWB.

In an embodiment, either the first electronic device 202 or the second electronic device 204 is operable to operate as a primary device, and the other one is operable to operate as a secondary device. The electronic device (e.g., the first electronic device 202) operating as primary is operable to transmit data (e.g., reception acknowledgment signal or relay data) to the electronic device (e.g., the source electronic device 204) operating as secondary. For example, when the first electronic device 202 and the second electronic device 204 establish a communication link with each other, any one of the first electronic device 202 and the second electronic device 204 is operable to be selected as primary, and the other is operable to be selected as secondary.

In an embodiment, when the first electronic device 202 and the second electronic device 204 establish a communication connection therebetween, the device detected as first worn (e.g., when a value indicating wearing is detected by a wearing detection sensor (e.g., a proximity sensor, a touch sensor, a slope 6-axis sensor, or a 9-axis sensor)) may be selected as the primary device, and the other as the secondary device.

The primary device (e.g., the first electronic device 202) is operable to transmit data received from the electronic device 101 to the secondary device (e.g., the second electronic device 204). For example, the first electronic device 202, which is the primary device, is operable to not only output audio to the speaker 354 based on audio data received from the electronic device 101, but also output the audio data or control data (e.g., connection information) related to the audio data to the second electronic device which is the secondary device. In an embodiment, the source electronic device 204 which is the secondary device is operable to receive the audio data, transmitted from the electronic device 101 to the primary device (e.g., the first electronic device 202), based on the connection information provided from the primary device (e.g., the first electronic device 202).

The first electronic device 202 which is the primary device is operable to transmit the data (e.g., audio data or control data) received from the second electronic device 204 which is the secondary device to the electronic device 101. For example, when a touch event occurs in the second electronic device 204 which is the secondary device, control data including information about the touch event may be transmitted to the electronic device 101 by the first electronic device 202 which is the primary device. However, without being limited to being as described, the secondary device (e.g., the source electronic device 204) and the electronic device 101 may establish a communication connection (e.g., the second communication link 406) therebetween as described above, so that the secondary device and the electronic device 101 may directly perform transmission and/or reception of data therebetween.

The electronic device 101, the first electronic device 202, and/or the second electronic device 204 are operable to communicate directly or indirectly with the external electronic device 250. In an embodiment, the external electronic device 250 may be an ear buds case device or cradle device for storing and charging the first electronic device 202 and the second electronic device 204.

According to an embodiment, the external electronic device 250 is operable to establish a connection (e.g., a communication link) with at least one of the electronic device 101, the first electronic device 202 or the second electronic device 204 and transmit and/or receive data to/from each other. For example, the external electronic device 250 is operable to establish a communication link with at least one of the electronic device 101, the first electronic device 202, or the source electronic device 204 based on a Wi-Fi scheme, a Bluetooth scheme (e.g., Bluetooth classic or Bluetooth low energy (BLE)) or UWB scheme, but the scheme in which the external electronic device 250 establishes a communication link with the electronic device 101, the first electronic device 202, or the source electronic device 204 is not limited to at least one of the Wi-Fi scheme, the Bluetooth scheme, or the UWB scheme.

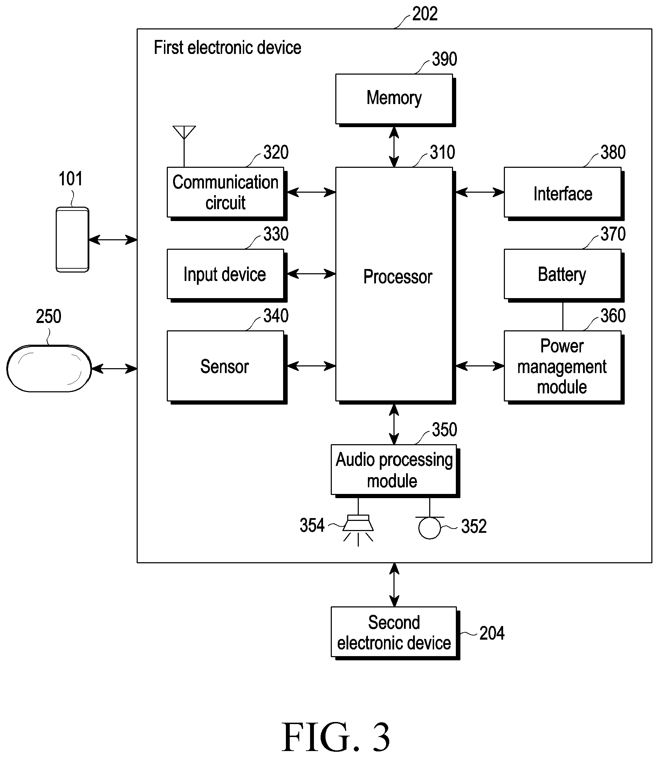

FIG. 3 is a view illustrating a configuration of an electronic device supporting short-range wireless communication according to an embodiment.

Referring to FIG. 3, the first electronic device 202 may include the same or similar components to at least one of the components (e.g., modules) of the electronic device 101 illustrated in FIG. 1. The first electronic device 202 may include at least one of a processor 310 (e.g., the processor 120 of FIG. 1), a communication circuit 320 (e.g., the communication module 190 of FIG. 1), an input device 330 (e.g., the input module 150 of FIG. 1), a sensor 340 (e.g., the sensor module 176 of FIG. 1), an audio processing module 350 (e.g., the audio module 170 of FIG. 1), a microphone 352 (e.g., the input module 150 of FIG. 1), a speaker 354 (e.g., the sound output module 155 of FIG. 1), a power management module 360 (e.g., the power management module 188 of FIG. 1), a battery 370 (e.g., the battery 189 of FIG. 1), an interface 380 (e.g., the interface 177 of FIG. 1), or memory 390 (e.g., the memory 130 of FIG. 1).

The communication circuit 320 may include at least one of a wireless communication module (e.g., a Bluetooth communication module, a cellular communication module, a wireless-fidelity (Wi-Fi) communication module, a near-field communication (NFC) communication module, or a global navigation satellite system (GNSS) communication module) or a wired communication module (e.g., a local area network (LAN) communication module or a power line communication (PLC) communication module). As an example, the Bluetooth communication module may support at least one communication connection (e.g., communication link) by Bluetooth legacy communication (e.g., Bluetooth classic) and/or Bluetooth low energy (BLE) communication.

The communication circuit 320 is operable to directly or indirectly communicate with at least one of the electronic device 101 (e.g., a smartphone), the external electronic device 250 (e.g., a charging device, such as a cradle), or the second electronic device 204 (e.g., the secondary earbud) through a first network (e.g., the first network 198 of FIG. 1), using at least one communication module. The second electronic device 204 is operable to be configured in a pair with the first electronic device 202. The communication circuit 320 includes a transmission circuit and a reception circuit configured to support communication with the electronic device 101 and/or the external electronic device 250. The communication module 320 includes one or more communication processors that are operable independently from the processor 310 and supports wired or wireless communication.

The communication circuit 320 is operable to be connected with one or more antennas for transmitting signals or information to another electronic device (e.g., the electronic device 101, the source electronic device 204, or the external electronic device 250) or receiving signals or information from the other electronic device. According to an embodiment, at least one antenna appropriate for a communication scheme used in a communication network, such as the first network (e.g., the first network 198 of FIG. 1) or the second network (e.g., the second network 199 of FIG. 2), may be selected from the plurality of antennas by, e.g., the communication circuit 320. The signal or information may then be transmitted or received between the communication circuit 320 and another electronic device via the selected at least one antenna.

The input device 330 may be configured to generate various input signals that may be used for operation of the first electronic device 202. The input device 330 may include at least one of a touch pad, a touch panel, or a button.

The input device 330 is operable to generate a user input regarding the turn-on/off of the first electronic device 202. According to an embodiment, the input device 330 is operable to receive a user input for a communication connection between the first electronic device 202 and the second electronic device 204. According to an embodiment, the input device 330 is operable to receive a user input associated with audio data (or audio content). For example, the user input may be associated with functions of starting playback of audio data, pausing playback, stopping playback, adjusting playback speed, adjusting playback volume, or muting.

The sensor 340 is operable to measure or identify the position or operational state of the first electronic device 202. The sensor 340 is operable to convert measured or identified information into an electric signal and provide the same to the processor 310. The sensor 340 may include at least one of, e.g., a magnetic sensor, an acceleration sensor, a gyro sensor, a geomagnetic sensor, a proximity sensor, a gesture sensor, a grip sensor, a biometric sensor, or an optical sensor.

The processor 310 is operable to detect data (e.g., audio data) from the data packets (e.g., data protocol data units (PDUs)) received from the electronic device 101 and is operable to process the detected data through the audio processing module 350 and output it to the speaker 354. The audio processing module 350 may support an audio data gathering function and reproduce the gathered audio data.

The audio processing module 350 may include an audio decoder (not shown) and a D/A converter (not shown). The audio decoder is operable to convert audio data stored in the memory 390 or received from the electronic device 101 through the communication circuit 320 into a digital audio signal. The D/A converter is operable to convert the digital audio signal converted by the audio decoder into an analog audio signal. The audio decoder is operable to convert audio data received from the electronic device 101 through the communication circuit 320 and stored in the memory 390 into a digital audio signal. The speaker 354 is operable to output the analog audio signal converted by the D/A converter.

The audio processing module 350 may include an A/D converter (not shown). The A/D converter is operable to convert the analog audio signal transferred through the microphone 352 (hereinafter, referred to as a mic) into a digital voice signal. The mic 352 may include at least one air conduction microphone and/or at least one bone conduction microphone for detecting voice and/or sound.

The audio processing module 350 is operable to play various audio data sets in the operation of the first electronic device 202. For example, the processor 310 may be designed to detect insertion or removal of the first electronic device 202 into/from the user's ear through the sensor 340 and reproduce audio data regarding an effect sound or guide sound through the audio processing module 350. The output of the sound effect or guide sound may be omitted according to the user setting or the designer's intention.

The memory 390 is operable to store various data used by at least one component (e.g., the processor 310 or the sensor 340) of the first electronic device 202. The data may include, e.g., software, instructions executable by the processor 310, and input data or output data related thereto. The memory 390 may include a volatile memory and/or a non-volatile memory.

The power management module 360 is operable to manage power supplied to the first electronic device 202. According to an embodiment, the power management module 360 may be implemented as at least part of, for example, a power management integrated circuit (PMIC). According to an embodiment, the power management module 360 may include a battery charging module. According to an embodiment, when another electronic device (e.g., the external electronic device 250) is electrically connected (wirelessly or wiredly) with the first electronic device 202, the power management module 360 is operable to receive power from the another electronic device to charge the battery 370.

The battery 370 is operable to supply power to at least one component of the first electronic device 202. The battery 370 may include, e.g., a rechargeable battery. According to an embodiment, if the first electronic device 202 is mounted in the cradle device (e.g., the third electronic device 250), the first electronic device 202 is operable to charge the battery 370 to a designated charging level and then power on the first electronic device 202 or turn on at least a portion of the communication circuit 320.

The interface 380 is operable to support one or more designated protocols that may be used for the first electronic device 202 to directly (e.g., wiredly) connect to the electronic device 101, the second electronic device 204, the external electronic device 250, or another electronic device. The interface 380 may include at least one of, e.g., a high definition multimedia interface (HDMI), a USB interface, an SD card interface, a power line communication (PLC) interface, or an audio interface. According to an embodiment, the interface 380 may include at least one connection port for establishing a physical connection with the cradle device (e.g., the external electronic device 250).

The processor 310 is operable to execute instructions and/or software to control at least one other component (e.g., a hardware or software component) of the first electronic device 202 connected with the processor 310 and is operable to perform various data processing or computations. According to an embodiment, as at least part of the data processing or computation, the processor 310 is operable to load a command or data received from another component (e.g., the sensor 340 or communication circuit 320) onto the memory 390 (e.g., volatile memory), process the command or the data stored in the memory 390 (e.g., volatile memory), and store resulting data in the memory 390 (e.g., non-volatile memory).

The processor 310 is operable to receive data (e.g., audio data) from the electronic device 101 and/or external electronic device (not shown) (e.g., a source electronic device) through the communication circuit 320. The processor 310 is operable to transmit the data, received from the electronic device 101 through the communication circuit 320, to the second electronic device 204 through the communication circuit 320. The processor 310 is operable to perform the operations of the first electronic device 202 according to embodiments of the disclosure. The processor 310 may include a physical layer, a link layer, a host, and an application layer for performing Bluetooth communication.

The memory 390 is operable to store instructions that, when executed by processor 310, enable the first electronic device 202 to operate according to embodiments of the disclosure. The memory 390 is operable to store control information and/or data necessary for the operation of the first electronic device 202 under the control of processor 310.

According to embodiments of the disclosure, the first electronic device 202 may further include various circuits and/or modules depending on the form in which it is provided. There are many variations according to the convergence trend of digital devices, so it is not possible to list them all, but components equivalent to the above-mentioned components may be further included in the first electronic device 202. Further, it is apparent that in the first electronic device 202 according to various embodiments, specific components may be excluded from the above components or replaced with other components according to the form in which it is provided. This will be easily understood by those of ordinary skill in the art.

According to an embodiment, the second electronic device 204 configured in a pair with the first electronic device 202 may include the same or similar components as those included in the first electronic device 202 and may perform all or some of the operations of the first electronic device 202 described below in connection with the drawings.

The BLE communication link may include at least one of a plurality of physical channels, e.g., an LE piconet physical channel, an LE advertising physical channel, an advertising periodic physical channel, and an LE isochronous physical channel, which may be optimized and used for their different purposes. The LE piconet physical channel may be used for communication between the connected devices and be connected with a specific piconet. The LE advertising physical channel may be used to broadcast advertising (advertisements) to the Bluetooth device. The advertising may be used to discover user data, connect, or send user data to the counterpart electronic device. The advertising periodical physical channel may be used to transmit user data to the counterpart electronic device 101 at specific intervals through periodic advertising. The LE isochronous physical channel may be used to transfer isochronous data between Bluetooth devices in an LE piconet, or to transfer isochronous data between unconnected Bluetooth devices.

An electronic device (e.g., the electronic device 101, the first electronic device 202, or the second electronic device 204) having a Bluetooth core version of 5.2 or higher may support an audio service through a connected isochronous stream (CIS) scheme and/or a broadcast isochronous stream (BIS) based on Bluetooth communication technology.

CIS may refer to logical transport that allows an electronic device (e.g., the electronic device 101, the first electronic device 202, or the second electronic device 204) to transmit isochronous data in any direction. CIS may carry data (e.g., CIS data packets) of a fixed or variable size, and each CIS link may be associated with an asynchronous connection-less (ACL) link. The CIS link may support transmission of variable-sized packets and one or more packets in each isochronous event, and may support a variety of data rates. Data traffic on the CIS link may be unidirectional or bidirectional, and an acknowledgment protocol may be used to enhance the reliability of data transfer on the CIS link.

BIS may refer to logical transport used to transmit one or more isochronous data streams to all devices (e.g., the electronic device 101, the first electronic device 202, or the second electronic device 204) for BIS within a specified range. The BIS may include one or more subevents for transmitting isochronous data packets (e.g., BIS data packets). The BIS may support transmission of several new isochronous data packets in all BIS events. The BIS does not include an acknowledgment protocol, and may be transmitted unidirectionally from a broadcasting device (e.g., the source electronic device 400 of FIG. 4) that broadcasts traffic.

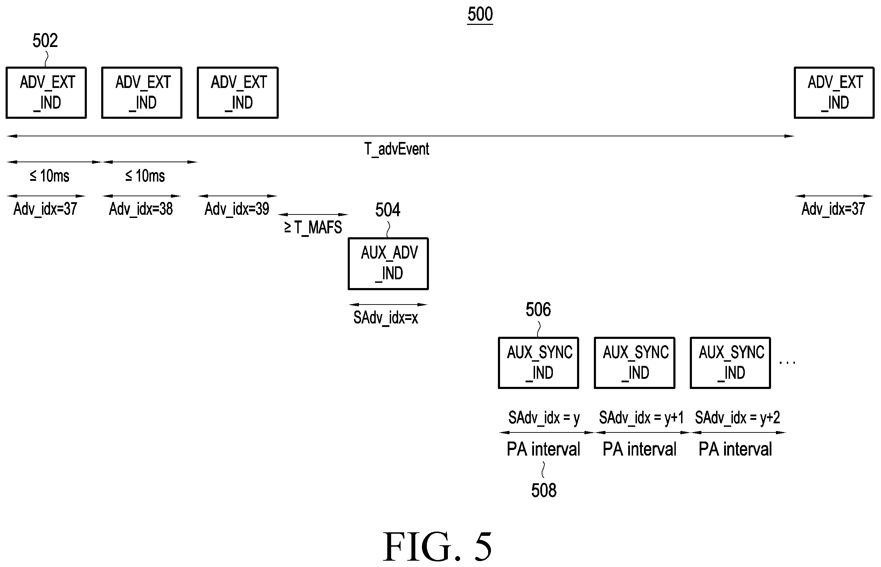

To enhance reliability of BIS logical transmission, isochronous data packets may be unconditionally retransmitted by increasing the number of subevents in all events. Transmission reliability may be enhanced by transmitting the isochronous data packets at an interval preceding an interval related to the isochronous data packets. This is referred to as pre-transmission. The BIS may be identified by a unique access address and timing information. The access address and timing information may be transmitted through advertising data (e.g., the AUX_SYNC_IND packet 506 of FIG. 5) transmitted using a corresponding periodic advertising broadcast logical transmission. A scanning device (e.g., a sink device) supporting a synchronized receiver role (e.g., a sink role) may receive isochronous data (e.g., isochronous data packets) from the BIS after synchronizing with the BIS using the timing information obtained from periodic advertising data (e.g., the AUX_SYNC_IND packet 506).

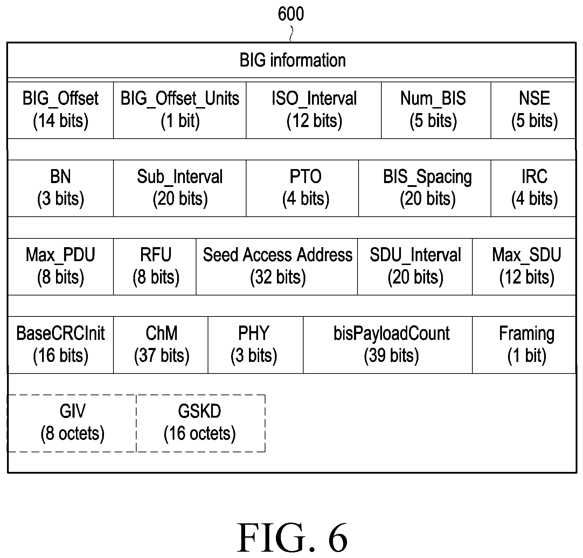

Each BIS may be part of a broadcast isochronous group (BIG). The BIG may include one or more BISs having the same isochronous interval (e.g., ISO_Interval of FIG. 6). BISs in the BIG have a common timing reference based on the source electronic device (e.g., the source electronic device 400 of FIG. 4), and may be temporally synchronized with each other. The maximum number of BISs in the BIG may have a designated value (e.g., 31). BIG may also include control subevents.

FIG. 4 is a view illustrating a circumstance in which an electronic device operates as an assistant of sink devices according to an embodiment of the disclosure.

Referring to FIG. 4, the electronic device 101 is operable to connect a communication link (e.g., the first communication link 404 and/or second communication link 406) with an external electronic device (e.g., the first electronic device 202 and/or second electronic device 204) that operates as a BIS sink to the source electronic device 400 that provides BIS audio services. In an embodiment, the electronic device 101 is operable to discover the presence of the first electronic device 202 and/or the second electronic device 204 using wireless communication technology (e.g., BLE, Wi-Fi, and/or UWB) and connect a communication link with the first electronic device 202 and/or the second electronic device 204.

The first electronic device 202 and/or the second electronic device 204 are operable to generate an advertising signal in a multicast manner or a broadcast manner so that a peripheral electronic device (e.g., the electronic device 101) may discover the first electronic device 202 and/or the second electronic device 204. The advertising signal may include a signal for connecting to an unspecified peripheral electronic device (e.g., electronic device 101) or transmitting information related to an account using wireless communication technology (e.g., BLE). For example, the first electronic device 202 and/or the second electronic device 204 may be stored in a case (e.g., the external electronic device 250), and may be configured to generate an advertising signal when the first electronic device 202 and/or the second electronic device 204 detect that the case is opened while being stored in the case.

In an embodiment, the advertising signal may include at least one of device identification information, user account information, information (e.g., current pairing information) about whether the first electronic device 202 and/or the second electronic device 204 are currently paired with another device (not shown), a list of previously paired devices (e.g., a pairing list), information about devices simultaneously pairable (e.g., simultaneous pairing information), transmission power information, information about the detection area or remaining battery (e.g., battery status information), or audio channel role (e.g., left or right) information.

The first electronic device 202 and/or the second electronic device 204 may generate an advertising signal according to a designated condition. In an embodiment, the first electronic device 202 and/or the second electronic device 204 is/are operable to start transmitting the advertising signal based on at least one of a power supply, a designated time period, a user input, or a case opening.

When the electronic device 101 discovers the first electronic device 202 and/or the second electronic device 204 based on the advertising signal from the first electronic device 202 and/or the second electronic device 204, the electronic device 101 is operable to output (e.g., display) a user interface for connection with the first electronic device 202 and/or the second electronic device 204. The electronic device 101 is operable to output the user interface based on the discovery of the first electronic device 202 and/or the second electronic device 204. For example, the user interface may include a device image corresponding to the discovered external electronic device (e.g., the first electronic device 202 and/or second electronic device 204).

In an embodiment, the source electronic device 400 is operable to generate a BIG including one or more BISs and generate BIG parameters related to the BIG (e.g., the BIG information 600 of FIG. 6). For BIS synchronization, at least one of the electronic device 101, the first electronic device 202, and the second electronic device 204 is operable to start a BLE scan. In an embodiment, the BLE scan may include an operation of monitoring reception of at least one advertising packet based on the BLE.

The source electronic device 400 is operable to broadcast advertising data related to the BIG. The advertising data may include extended advertising (EA) data 402 such as ADV_EXT_IND packets and/or AUX_ADV_IND packets, and periodic advertising (PA) data 408 such as AUX_SYNC_IND packets and/or AUX_CHAIN_IND packets. The EA data 402 (e.g., an AUX_ADV_IND packet) may include synchronization information required to receive the PA data 408. The PA data 408 (e.g., AUX_SYNC_IND packet) may include BIG parameters (e.g., the BIG information 600 of FIG. 6) in, e.g., an additional controller advertising data (ACAD) field. The BIG parameters may be used for the sink device (e.g., the first electronic device 202 or the second electronic device 204) to synchronize with the BIG (e.g., at least one BIS) provided by the source electronic device 400 and receive the BIS data 408a.

In an embodiment, the first electronic device 202 or the second electronic device 204 is operable to receive the PA data 408 from the source electronic device 400 based on synchronization information provided through the first communication link 404 or the second communication link 406 form the electronic device 101 playing a BIS assistant role or directly received from the source electronic device 400 through the BLE scan.

In an embodiment, the electronic device 101 is operable to may receive EA and/or PA (EA/PA) data 402 required to receive BIG parameters from the source electronic device 400 through the BLE scan (e.g., a BIS scan). In an embodiment, the electronic device 101 is operable to display a search result user interface (UI) indicating that BIS synchronization for the source electronic device 400 is possible based on receiving the EA data and receive a user input requesting to start receiving a BIS service through the search result UI. The electronic device 101 is operable to transmit synchronization information obtained from the EA data to the first electronic device 202 and/or the second electronic device 204 through the first communication link 404 and/or the second communication link 406 based on the user input. In an embodiment, the electronic device 101 is operable to perform a PA scan based on EA data from the source electronic device 400 to receive PA data and display broadcast service information obtained from the PA data.

In an embodiment, the first electronic device 202 or the second electronic device 204 is operable to receive the PA data 408 from the source electronic device 400 based on synchronization information received from the electronic device 101 playing a BIS assistant role without performing the BLE scan (e.g., a BIG scan) and obtain BIG parameters (e.g., the BIG information 600) from the PA data 408. The first electronic device 202 or the second electronic device 204 is operable to synchronize with the BIG (e.g., at least one BIS) of the source electronic device 400 based on the BIG parameters. In an embodiment, the BIG synchronization operation performed by the sink device may include an operation of calculating an access address and timing information through which the BIS data 408a is transmitted using the BIG parameters. In an embodiment, the timing information may indicate the times of transmission of the audio data and the channel information (e.g., a channel map).

The first electronic device 202 or the second electronic device 204 is operable to receive BIS data 408a (e.g., the BIS data packets) broadcast by the source electronic device 400 through the at least one synchronized BIS. The first electronic device 202 or the second electronic device 204 is operable to continuously receive the PA data 408 and the BIS data 408a broadcast by the source electronic device 400 while being synchronized with the at least one BIS.

FIG. 5 is a view illustrating an advertising operation for BIS according to an embodiment of the disclosure.

Referring to FIG. 5, the advertising train 500 may be used for transmission of extended advertising (EA) data such as at least one ADV_EXT_IND packet 502 and/or at least one AUX_ADV_IND packet 504 and periodic advertising (PA) data such as at least one AUX_SYNC_IND packet 506 and/or at least one AUX_CHAIN_IND packet (not shown).

The ADV_EXT_IND packet 502 may be transmitted through common channels (e.g., advertising channel index Adv_idx=37, 38, and 39), and may include information indicating the transmission point of AUX_ADV_IND packet 504 (e.g., AuxPtr field). The AUX_ADV_IND packet 504 may be transmitted according to a specific channel map (e.g., the secondary advertising channel index SAdv_idx=x) identified by the ADV_EXT_IND packet 502 and may include information indicating the transmission point of the AUX_SYNC_IND packet 506 (e.g., the AuxPtr field).

The sink device (e.g., the electronic device 101, the first electronic device 202, or the second electronic device 204) that has obtained the AUX_SYNC_IND packet 504 is operable to receive the AUX_SYNC_IND packet 506 at the transmission point. The AUX_SYNC_IND packet 506 may start to be transmitted through channels (e.g., SADv_idx=y, y+1, and y+2) indicated by SADv_idx at the start point of each periodic advertising (PA) interval 508. Each PA interval 508 includes an AUX_SYNC_IND packet 506 and may further include at least one AUX_CHAIN_IND packet (not shown) if necessary. The AUX_SYNC_IND packet 506 may include BIG parameters (e.g., the BIG information 600 of FIG. 6) associated with a broadcast audio service.

In an embodiment, the AUX_SYNC_IND packet 506 may include broadcast service information (e.g., broadcast service name, codec information, audio information, and/or appearance information) about the BIS currently streaming in the AdvData field. The sink device (e.g., the electronic device 101) that has obtained the AUX_SYNC_IND packet 506 is operable to display the broadcast service information.

FIG. 6 is a view illustrating BIG information according to an embodiment of the disclosure.

Referring to FIG. 6, the BIG information 600 may include BIG parameters, such as at least one of BIG_Offset, BIG_Offset_units, ISO_Interval, Num_BIS, number of subevent (NSE), burst number (BN), Sub_Interval, pre-transmission offset (PTO), BIS_Spacing, immediate repetition count (IRC), Max_PDU, reserved for future use (RFU), SeedAccessAddress, SDU_Interval, Max_SDU, BaseCRClnit, channel map (ChM), physical (PHY), bisPayloadCount, Framing, group initialization vector (GIV), or group session key derivation (GSKD). In an embodiment, the length of the BIG information 600 may be 33 octets when not encrypted, and 57 octets when encrypted.

BIG parameters that may be included in the BIG information 600 will be described below.

Num_BIS indicates the number of BISs in the BIG. Each of the BISs in the BIG may be assigned a different BIS_Number from 1 to Num_BIS.

ISO_Interval may indicate a time of 1.25 ms between two adjacent BIG anchor points. (e.g. 5ms to 4s)

BIS_Spacing may indicate the time between the start time of the subevents in adjacent BISs in the BIG and the start time of the first subevent of the last BIS.

Sub_Interval may indicate the time between start times of two consecutive subevents of each BIS.

Max_PDU is the maximum number of data octets capable of transmitting each BIS data packet within the BIG and may indicate the maximum duration of the packet. (e.g. 1 to 251 octets)

Max_SDU may indicate the maximum size (e.g., maximum duration) of the service data unit (SDU) in the BIG. (e.g. 1 to 4095 octets)

BN, PTO, and IRC may include values for controlling which data is transmitted in each BIG event. Subevents of each BIS event may be divided into groups (e.g., subevent groups) including BN subevents. Thus, the group count (GC)) is NSE/BN. IRC may designate the number of groups carrying data related to the current BIS event. The remaining groups may carry data related to future BIS events designated by the PTO.

IRC may be greater than 0 and may not be greater than GC. If IRC = GC, the PTO may be ignored, otherwise the PTO may be greater than zero. Groups of subevents may be sequentially numbered (e.g., group index g) from 0 to GC-1. When g < IRC, the group g may include data related to the current BIS event. When g >= IRC, group g may include data related to a future BIS event (e.g., PTO * (g - IRC + 1)th BIS event) after the current BIS event.

The NSE indicates the maximum number of subevents within each BIG event.

The framing field may indicate whether the BIG transmits framed data or unframed data.

BIG_Offset may indicate the time from the start time of the packet (e.g., AUX_SYNC_IND) including the BIG information 600 to the next BIG anchor point. The value of BIG_Offset may be indicated in units indicated by bits of BIG_Offset_Units. The time offset is determined by multiplying the value of BIG_Offset by the unit indicated by BIG_Offset_Units. The time offset may be greater than 600 µs (micro second). When the bit of BIG_Offset_Units is set, the unit is 300 µs, otherwise 30 µs. The bit of BIG_Offset_Units may not be set if the time offset is less than 491,460 µs. The BIG anchor point may be between the time offset and the time offset plus 1 unit after the start time of the packet (e.g., AUX_SYNC_IND) as follows.

The parameters included in the BIG information 600 may not be changed during the lifetime of the BIG.

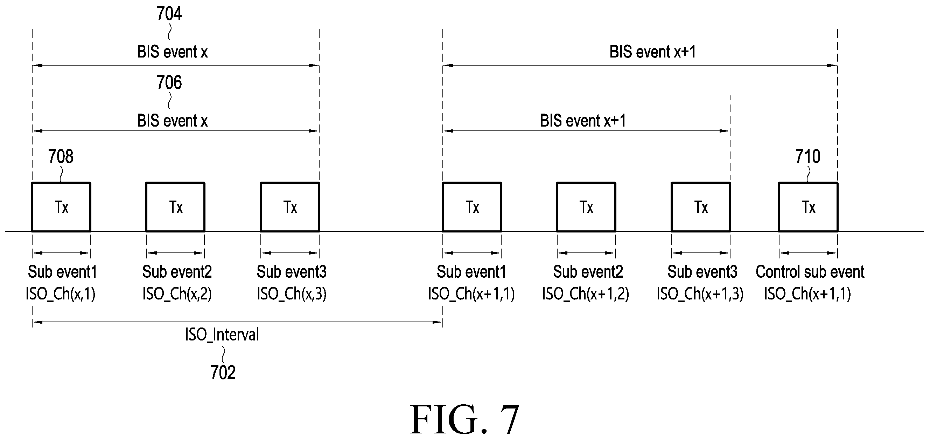

FIG. 7 is a timing diagram illustrating reception of BIS data based on BIG parameters according to an embodiment of the disclosure.

Referring to FIG. 7, the BIG information (e.g., the BIG information 600 of FIG. 6) broadcasted by the source electronic device 400 through periodic advertising may include Num_BIS, ISO_Interval, BN, NSE, Sub_Interval, BIS_spacing, PTO, IRC, and/or Max_PDU. The ISO_Interval 702 defining the BIS interval may include a BIG event (e.g., the BIG event x 704) defined by BIG parameters.

The BIG event x 704 may include at least one BIS event (e.g., the BIS event x 706) defined by Num_BIS, and the BIS event x 706 may include at least one sub event defined by the NSE (e.g., sub event 1 708, sub event 2, and sub event 3). Subevent 1 708 may carry the BIS data packet of ISO_Ch(x,1), subevent 2 may carry the BIS data packet of ISO_Ch(x,2), and subevent 3 may carry the BIS data packet of ISO_Ch(x,3).

Similarly, BIG event x+1 may include at least one BIS event (e.g., the BIS event x), and BIS event x+1 may include sub event 1 carrying a BIS data packet of ISO_Ch (x+1,1), sub event 2 carrying a BIS data packet of ISO_Ch (x+1,2), and sub event 3 carrying a BIS data packet of ISO_Ch (x+1,3). In an embodiment, the BIS event x+1 may further include a control sub event 710 carrying a control data packet of ISO_Ch(x+1).

In an embodiment, the first electronic device 202 and/or the second electronic device 204 is operable to maintain BIS synchronization by continuously receiving periodic advertising (PA) data while receiving BIS data in synchronization with the BIS. In an embodiment, if the PA is not continuously received for a designated time (e.g., 6 PA intervals), the first electronic device 202 and/or the second electronic device 204 is operable to generate a timeout (e.g., a BIS failure event and/or a synchronization timeout event) and terminate BIS synchronization.

In an embodiment, the electronic device 101 playing a BIS assistant role of the first electronic device 202 and/or the second electronic device 204 is operable to performs a BIS scan for receiving synchronization information (e.g., EA data) to be used for BIS synchronization in the first electronic device 202 and/or the second electronic device 204 from the source electronic device 400, based on determining (e.g., identifying or estimating) that BIS synchronization is terminated in the first electronic device 202 and/or the second electronic device 204. The electronic device 101 is operable to obtains synchronization information from EA data received from the source electronic device 400 through the BIS scan and transmits the synchronization information to the first electronic device 202 and/or the second electronic device 204 where BIS synchronization has been identified as terminated.

In an embodiment, while the first electronic device 202 is synchronized to the source electronic device 400 through the electronic device 101 operating as the BIS assistant, when a new sink device (e.g., the second electronic device 204) attempts to synchronize to the source electronic device 400 through the electronic device 101, the electronic device 101 is operable to performs a BIS scan for receiving synchronization information (e.g., EA data) to be used for BIS synchronization at the second electronic device 204 from the source electronic device 400.

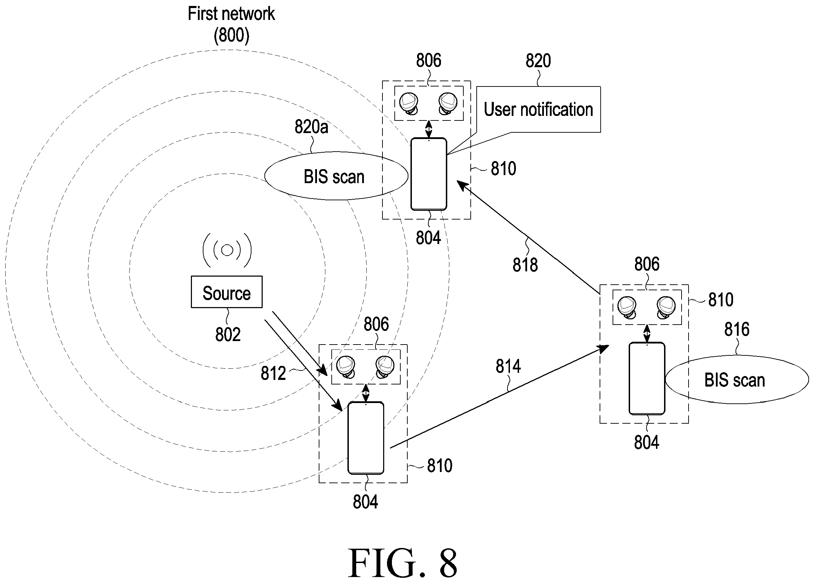

FIG. 8 is a view illustrating an operation of performing a BIS scan when synchronization is terminated according to an embodiment of the disclosure.

Referring to FIG. 8, the first network 800 may include a source electronic device 802 (e.g., the source electronic device 400) that provides BIS services and at least one electronic device (e.g., the electronic device 804 and/or external electronic device 806) that is synchronized with the source electronic device 802. Within the first network 800, the source electronic device 802 is operable to broadcast EA data (e.g., the ADV_EXT_IND packet 502 and AUX_ADV_IND packet 504), PA data (e.g., the AUX_SYNC_IND packet 506), and BIS data for a BIS service.

The second network 810 may include an electronic device 804 acting as a BIS assistant to help synchronize operations for the first network (e.g., the source electronic device 802), and an external electronic device 806 (e.g., the first communication link 404 and/or the second communication link 406) connected to the electronic device 804 via a wireless communication link (e.g., the first electronic device 202 and/or the second electronic device 204).

In operation 812, the electronic device 804 is operable to discover the source electronic device 802 by performing the BLE scan (e.g., the BIS scan) and receive EA data including synchronization information for the source electronic device 802 from the source electronic device 802. The electronic device 804 is operable to transfer synchronization information about the source electronic device 802 to the external electronic device 806 to synchronize with the first network (e.g., the source electronic device 802). In an embodiment, the electronic device 804 is operable to receive PA data from the source electronic device 802 based on the EA data and display broadcast service information obtained from the PA data.

The external electronic device 806 is operable to receive PA data including BIG parameters (e.g., the BIG information 600 of FIG. 6) from the source electronic device 802 based on the synchronization information, and receive BIS data from the source electronic device 802 in synchronization with the BIS of the source electronic device 802 based on the BIG parameters. The external electronic device 806 is operable to maintain BIS synchronization with respect to the source electronic device 802 by periodically receiving PA data from the source electronic device 802 after being synchronized with the BIS of the source electronic device 802.

In operation 814, when the electronic device 804 and the external electronic device 806 are out of the signal coverage of the first network 800, the electronic device 804 and the external electronic device 806 fail to receive PA data from the source electronic device 802, and accordingly, BIS synchronization to the source electronic device 802 may not be maintained.

In operation 816, the electronic device 804 is operable to perform the BIS scan for searching for the source electronic device 802 previously synchronized by the external electronic device 806 based on identifying that the BIS synchronization to the source electronic device 802 is terminated in the external electronic device 806. In an embodiment, the external electronic device 806 is operable to transfer synchronization termination information indicating that BIS synchronization is terminated to the electronic device 804. In an embodiment, the electronic device 804 is operable to determine that BIS synchronization has been terminated in the external electronic device 806 based on the failure to receive PA data from the source electronic device 802. In an embodiment, the electronic device 804 is operable to measure the communication quality (e.g., the link quality indicator (LQI) or receive signal strength indicator (RSSI) for the source electronic device 802 and determine that BIS synchronization has been terminated in the external electronic device 806 based on the communication quality being less than a designated reference value. In an embodiment, the electronic device 804 is operable to perform the BIS scan for periodically searching for the source electronic device 802 according to a designated period.

In operation 818, the electronic device 804 and the external electronic device 806 may enter the signal coverage of the first network 800 again. In operation 820a, within the signal coverage of the first network 800, the electronic device 804 may succeed in receiving EA data from the source electronic device 802 through the BIS scan. In an embodiment, the electronic device 804 is operable to determine that it has succeeded in receiving EA data from the source electronic device 802 based on identifying that the Broadcast_ID included in the EA data (e.g., the AUX_ADV_IND packet 504) received through the BIS scan is the same as the Broadcast_ID of the previously received EA data. In an embodiment, the electronic device 804 is operable to perform a PA scan based on the EA data to receive PA data and display broadcast service information obtained from the PA data.

In operation 820, the electronic device 804 is operable to inform the user that the source electronic device 802 has been searched, and may transfer synchronization information obtained from the EA data to the external electronic device 806. The external electronic device 806 is operable to synchronize again with the BIS of the source electronic device 802 using the synchronization information.

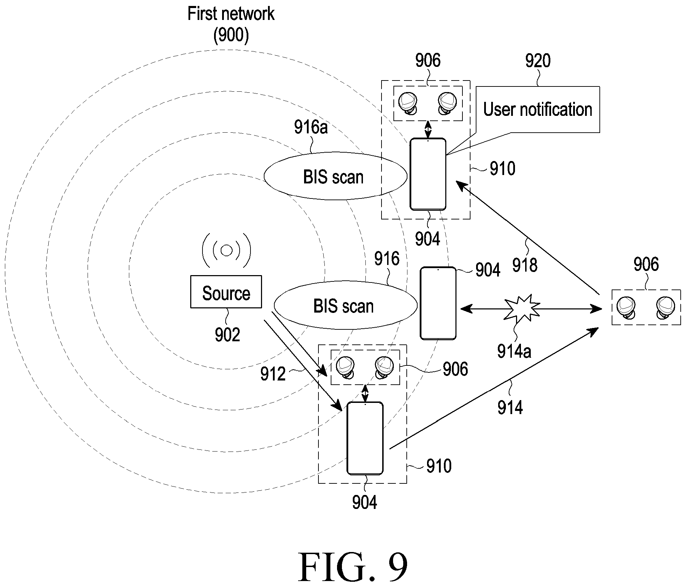

FIG. 9 is a view illustrating an operation of performing a BIS scan when a first communication link is disconnected according to an embodiment of the disclosure.

Referring to FIG. 9, the first network 900 may include a source electronic device 902 (e.g., the source electronic device 400) that provides a BIS service and at least one electronic device (e.g., the electronic device 904 and/or external electronic device 906) that is synchronized with the source electronic device 902. Within the first network 900, the source electronic device 902 is operable to broadcast EA data for a BIS service (e.g., the ADV_EXT_IND packet 502 and AUX_ADV_IND packet 504), PA data (e.g., the AUX_SYNC_IND packet 506), and BIS data.

The second network 910 may include an electronic device 904 acting as a BIS assistant to help synchronize operations for the first network (e.g., the source electronic device 802), and an external electronic device 906 (e.g., the first communication link 404 and/or the second communication link 406) connected to the electronic device 904 via a wireless communication link (e.g., the first electronic device 202 and/or the second electronic device 204).

In operation 912, the electronic device 904 is operable to discover the source electronic device 902 by performing the BLE scan (e.g., the BIS scan) and receive EA data including synchronization information for the source electronic device 902 from the source electronic device 902. The electronic device 904 is operable to transfer synchronization information about the source electronic device 802 to the external electronic device 904 to synchronize with the first network (e.g., the source electronic device 902). In an embodiment, the electronic device 904 is operable to receive PA data from the source electronic device 902 based on the EA data and display broadcast service information obtained from the PA data.

The external electronic device 906 is operable to receive PA data including BIG parameters (e.g., the BIG information 600 of FIG. 6) from the source electronic device 902 based on the synchronization information, and receive BIS data from the source electronic device 902 in synchronization with the BIS of the source electronic device 802 based on the BIG parameters. The external electronic device 906 is operable to maintain BIS synchronization with respect to the source electronic device 902 by periodically receiving PA data from the source electronic device 902 after being synchronized with the BIS of the source electronic device 902.

In operation 914, when the external electronic device 906 receiving the BIS service while being in the signal coverage of the first network 900 falls outside the signal coverage of the first network 900, the external electronic device 906 fails to receive PA data from the source electronic device 802, and accordingly, BIS synchronization to the source electronic device 902 may not be maintained. Further, as the distance between the electronic device 904 and the external electronic device 906 increases, the wireless communication link (e.g., the first communication link 404 and/or the second communication link 406) with the electronic device 904 and the external electronic device 906 may be disconnected.

In operation 914a, the electronic device 904 is operable to determine (e.g., estimate) that BIS synchronization to the source electronic device 902 at the external electronic device 906 has been terminated based on the disconnection of the wireless communication link (e.g., the first communication link 404 and/or the second communication link 406) with the external electronic device 906. In an embodiment, when the electronic device 904 is within the signal coverage of the first network 900, but the external electronic device 906 is out of the signal coverage of the first network 900, the wireless communication link between the electronic device 904 and the external electronic device 906 may be disconnected.

In an embodiment, the electronic device 904 is operable to determine (e.g., estimate) that the BIS synchronization to the source electronic device 902 at the external electronic device 906 has been terminated based on the deterioration of the communication quality of the wireless communication link (e.g., the first communication link 404 and/or the second communication link 406) with the external electronic device 906. In an embodiment, when the communication quality (e.g., the link quality indicator (LQI) or RSSI) measured for the external electronic device 906 is smaller than a designated reference value, the electronic device 904 is operable to determine that BIS synchronization to the source electronic device 902 has been terminated in the external electronic device 906.

In operation 916, the electronic device 904 is operable to perform the BIS scan for searching for the source electronic device 902 previously synchronized by the external electronic device 906 based on determining that the BIS synchronization to the source electronic device 902 has been terminated. In an embodiment, the electronic device 904 is operable to stop the BIS scan when the electronic device 904 fails to receive EA data from the source electronic device 902 previously synchronized even though the BIS scan has been performed for a designated time. In an embodiment, the electronic device 904 is operable to perform a PA scan based on the EA data to receive PA data and display broadcast service information obtained from the PA data.

In operation 916a, within the signal coverage of the first network 900, the electronic device 904 may succeed in receiving EA data from the source electronic device 902 through the BIS scan. In an embodiment, the electronic device 904 is operable to determine that EA data has been successfully received from the source electronic device 902 based on identifying that the Broadcast_ID included in the EA data (e.g., the AUX_ADV_IND packet 504) received through the BIS scan is the same as the Broadcast_ID of the previously received EA data.

In operation 918, the external electronic device 906 may enter the signal coverage of the first network 900 again. The electronic device 904 positioned within the signal coverage of the first network 900 is operable to discover the external electronic device 906 (e.g., detection of a BT legacy or BLE advertising signal from the external electronic device 906) and reconnect the wireless communication link with the external electronic device 906 as the distance to the external electronic device 906 decreases. The electronic device 904 is operable to determine to provide synchronization information to the external electronic device 906 again based on reconnection with the external electronic device 906.

In operation 920, the electronic device 904 is operable to inform the user that the source electronic device 902 has been searched, and transfer the synchronization information obtained from the EA data to the external electronic device 906 through the reconnected wireless communication link, so that the external electronic device 906 may synchronize again with the BIS of the source electronic device 902 using the synchronization information.

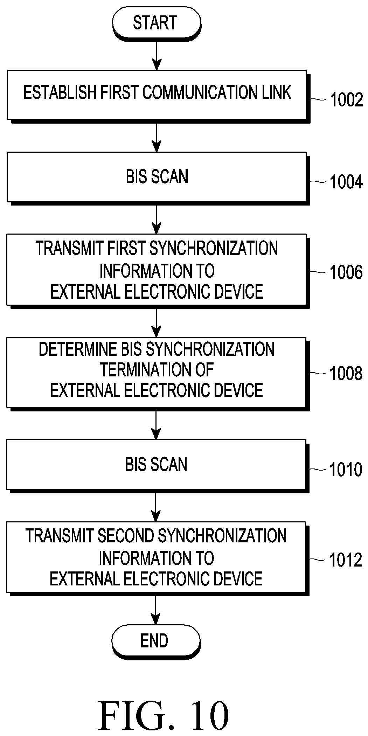

FIG. 10 is a flowchart illustrating a procedure of performing a BIS scan when BIS synchronization is terminated according to an embodiment of the disclosure. According to embodiments, at least one of the operations to be described below may be executed by the processor 120 of the electronic device 101 or as the processor 120 controls the communication module 190. According to embodiments, the memory 130 of the electronic device 101 may store instructions that, when executed by the processor 120, cause the electronic device 101 to perform at least one of the operations described below. According to embodiments, at least one of operations to be described below may be omitted, modified, or executed in a different order.

Referring to FIG. 10, in operation 1002, the electronic device 101 (e.g., the processor 120) may establish a first communication link (e.g., the first communication link 404) with an external electronic device (e.g., the first electronic device 202). In an embodiment, the first communication link 404 may include a Bluetooth-based ACL link.

In operation 1004, the electronic device 101 (e.g., the processor 120) may perform a BLE scan (e.g., a BIS scan) for searching for a source electronic device (e.g., the source electronic device 400) for a BIS service. In an embodiment, the electronic device 101 (e.g., the processor 120) may start the BIS scan based on execution of an application or a user input.

In an embodiment, the BIS scan may include an EA scan that receives advertising data through the BLE scan and identifies that the advertising data includes EA data for a BIS service, and/or a PA scan that monitors the reception of PA data based on the EA data. In an embodiment, the EA data may include synchronization information for use in receiving PA data from the source electronic device 400. The PA data may include BIG information (e.g., the BIG information 600 of FIG. 6) used to receive BIS data from the source electronic device 400.

In an embodiment, the electronic device 101 (e.g., the processor 120) may receive the EA data from the source electronic device 400 through the BIS scan and obtain first synchronization information from the EA data. In an embodiment, the first synchronization information may include at least one of an advertiser address type, an advertiser address (e.g., the media access control (MAC) address of the source electronic device 400), an advertising set ID (advertising SID), a broadcast ID, a PA interval (e.g., the PA interval 508), a number of subgroups, a BIS sync parameter, a metadata length, or metadata.

In an embodiment, the electronic device 101 (e.g., the processor 120) may perform the BIS scan based on a user input. The electronic device 101 (e.g., the processor 120) may perform an EA scan based on receiving a user input for selecting a search for a BLE-based audio broadcast (auracast), and may perform a PA scan based on obtaining EA data through the EA scan. The electronic device 101 (e.g., the processor 120) may obtain broadcast service information from the PA data received through the PA scan and display a broadcast channel list including the broadcast service information. Based on receiving a user input for selecting the broadcast service information through the broadcast channel list, the electronic device 101 (e.g., the processor 120) may proceed to operation 1006.

In operation 1006, the electronic device 101 (e.g., the processor 120) may transmit the first synchronization information to an external electronic device (e.g., the first electronic device 202) through the first communication link 404. In an embodiment, the first synchronization information may be included in the LL_PERIODIC_SYNC_IND packet transferred through the first communication link 404 (e.g., the LE-ACL link). In an embodiment, the electronic device 101 may display a UI including broadcast service information (e.g., the broadcast service name and/or the device name) about the source electronic device 400 obtained through EA data, and may transmit the first synchronization information to an external electronic device (e.g., the first electronic device 202) based on receiving a user input through the UI. In an embodiment, the electronic device 101 may transmit the first synchronization information to allow the external electronic device (e.g., the first electronic device 202) to perform BIS synchronization to the source electronic device 400 based on the first synchronization information.

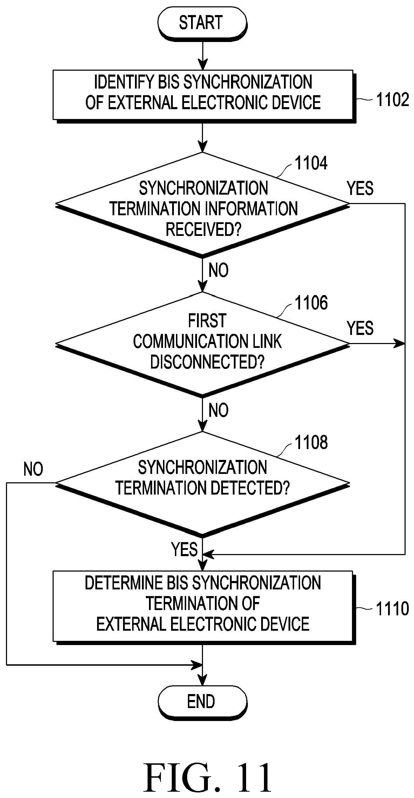

In operation 1008, the electronic device 101 (e.g., the processor 120) may determine (e.g., identify or estimate) that BIS synchronization to the source electronic device 400 is terminated in the external electronic device (e.g., the first electronic device 202). In an embodiment, the electronic device 101 (e.g., the processor 120) may detect the termination of BIS synchronization in the external electronic device (e.g., the first electronic device 202) without the user's manipulation. In an embodiment, operation 1008 may include the procedure of FIG. 11 (e.g., at least one of operation 1104, operation 1106, or operation 1108). In an embodiment, operation 1008 may include an operation of instructing the external electronic device (e.g., the first electronic device 202) to terminate BIS synchronization based on receiving a user input requesting to terminate the BIS synchronization by the electronic device 101 (e.g., the processor 120).

In an embodiment, the electronic device 101 may determine that the BIS synchronization to the source electronic device 400 is terminated in the external electronic device (e.g., the first electronic device 202) based on receiving the synchronization termination information from the external electronic device (e.g., the first electronic device 202). In an embodiment, the electronic device 101 may estimate that BIS synchronization with the source electronic device 400 is terminated in the external electronic device (e.g., the first electronic device 202) based on the disconnection of the first communication link 404 with the external electronic device (e.g., the first electronic device 202). In an embodiment, the electronic device 101 continuously monitors the reception of PA data from the source electronic device 400 after providing the first synchronization information to the external electronic device (e.g., the first electronic device 202), and estimates that the BIS synchronization to the source electronic device 400 has been terminated based on the failure of the PA data from the source electronic device 400 for a designated time (e.g., the 6 PA intervals).

In operation 1010, the electronic device 101 (e.g., the processor 120) may perform the BIS scan to receive advertising data for the source electronic device 400 previously synchronized with the external electronic device (e.g., the first electronic device 202) based on determining that the BIS synchronization is terminated in the external electronic device (e.g., the first electronic device 202). In an embodiment, the BIS scan may include an EA scan in which the electronic device 101 (e.g., the processor 120) performs a BLE scan to receive advertising data and identifies that the advertising data includes EA data for the BIS service of the source electronic device 400 previously received by the external electronic device and/or a PA scan that monitors the reception of PA data based on the EA data. In an embodiment, the electronic device 101 (e.g., the processor 120) may perform the BIS scan for a designated time.

In an embodiment, the electronic device 101 (e.g., the processor 120) may receive the EA data from the source electronic device 400 through the EA scan and obtain second synchronization information for use in receiving PA data from the source electronic device 400 from the EA data. In an embodiment, the second synchronization information may include parameters that are the same as or at least partially different from the first synchronization information.

In an embodiment, the electronic device 101 (e.g., the processor 120) may compare the Broadcast_ID included in the EA data with the Broadcast_ID related to the BIS service of the source electronic device 400 previously received by the external electronic device and identify whether they match and, if matched, perform the PA scan based on the EA data. The electronic device 101 (e.g., the processor 120) may display broadcast service information related to the BIS service based on the BIG information received through the PA scan.

In operation 1012, the electronic device 101 (e.g., the processor 120) may transmit the second synchronization information to an external electronic device (e.g., the first electronic device 202) through the first communication link 404. In an embodiment, the second synchronization information may be included in the LL_PERIODIC_SYNC_IND packet transferred through the first communication link 404 (e.g., the LE-ACL link). In an embodiment, the electronic device 101 may display a UI (e.g., the search result UI) indicating that the source electronic device 400 has been rediscovered through the BIS scan, and may transmit the second synchronization information to the external electronic device (e.g., the first electronic device 202) based on receiving a user input through the search result UI. In an embodiment, the electronic device 101 may transmit the second synchronization information to allow the external electronic device (e.g., the first electronic device 202) to perform BIS synchronization to the source electronic device 400 based on the second synchronization information.

FIG. 11 is a flowchart illustrating a procedure of performing a BIS scan when BIS synchronization is terminated according to an embodiment of the disclosure. According to embodiments, at least one of the operations to be described below may be executed by the processor 120 of the electronic device 101 or as the processor 120 controls the communication module 190. According to embodiments, the memory 130 of the electronic device 101 may store instructions that, when executed by the processor 120, cause the electronic device 101 to perform at least one of the operations described below. According to embodiments, at least one of the operations to be described below may be omitted, modified, and performed in a different order or simultaneously with at least one other operation.

Referring to FIG. 11, in operation 1102, the electronic device 101 (e.g., the processor 120) may identify that an external electronic device (e.g., the first electronic device 202) performs BIS synchronization to the source electronic device 400. In an embodiment, the electronic device 101 (e.g., the processor 120) may operate as a BIS assistant while transmitting synchronization information (e.g., the first synchronization information) obtained from the EA data to an external electronic device (e.g., the first electronic device 202) through a first communication link (e.g., the first communication link 404) and then determine that the external electronic device (e.g., the first electronic device 202) has been synchronized to the source electronic device 400.

In operation 1104, the electronic device 101 (e.g., the processor 120) may determine whether synchronization termination information is received from the external electronic device (e.g., the first electronic device 202) through the first communication link 404. In an embodiment, the electronic device 101 (e.g., the processor 120) may receive the synchronization termination information after transmitting a synchronization termination identify request to the external electronic device (e.g., the first electronic device 202). In an embodiment, the synchronization termination information may include ACL data packets of a designated format transferred through the first communication link 404. When the synchronization termination information is received, the electronic device 101 (e.g., the processor 120) may proceed to operation 1110. When the synchronization termination information is not received, the electronic device 101 (e.g., the processor 120) may proceed to operation 1106.

In operation 1106, the electronic device 101 (e.g., the processor 120) may determine whether the first communication link 404 is disconnected. In an embodiment, the electronic device 101 (e.g., the processor 120) may determine that the first communication link 404 is disconnected if a corresponding response packet (e.g., the ack packet or nulling (N) packet) is not received for a designated time after transferring the packet (e.g., the data packet, the control packet, or the polling (P) packet) transferred through the first communication link 404. When it is determined that the first communication link 404 is disconnected, the electronic device 101 (e.g., the processor 120) may proceed to operation 1110. When it is not determined that the first communication link 404 is disconnected, the electronic device 101 (e.g., the processor 120) may proceed to operation 1108. In an embodiment, the electronic device 101 (e.g., the processor 120) may perform an operation (e.g., the operation 1108) of determining whether the first communication link 404 is disconnected periodically or at a designated time.

In operation 1108, the electronic device 101 (e.g., the processor 120) may directly determine whether termination of BIS synchronization to the source electronic device 400 has been detected. In an embodiment, the electronic device 101 (e.g., the processor 120) may continuously monitor the reception of PA data from the source electronic device 400 after transferring the first synchronization information to the external electronic device (e.g., the first electronic device 202). When the reception of PA data fails for a designated time (e.g., 6 PA intervals), the electronic device 101 (e.g., the processor 120) may determine that the termination of BIS synchronization to the source electronic device 400 has been detected. When it is determined that the BIS synchronization termination is detected, the electronic device 101 (e.g., the processor 120) may proceed to operation 1110. When it is not determined that the BIS synchronization termination is detected, the electronic device 101 (e.g., the processor 120) may terminate the procedure.

In operation 1110, the electronic device 101 (e.g., the processor 120) may determine that BIS synchronization to the source electronic device 400 has been terminated in the external electronic device (e.g., the first electronic device 202). In an embodiment, the electronic device 101 (e.g., the processor 120) may detect the termination of BIS synchronization in the external electronic device (e.g., the first electronic device 202) by at least one, or a combination of at least two, of operation 1104, operation 1106, or operation 1108, without the user's manipulation.

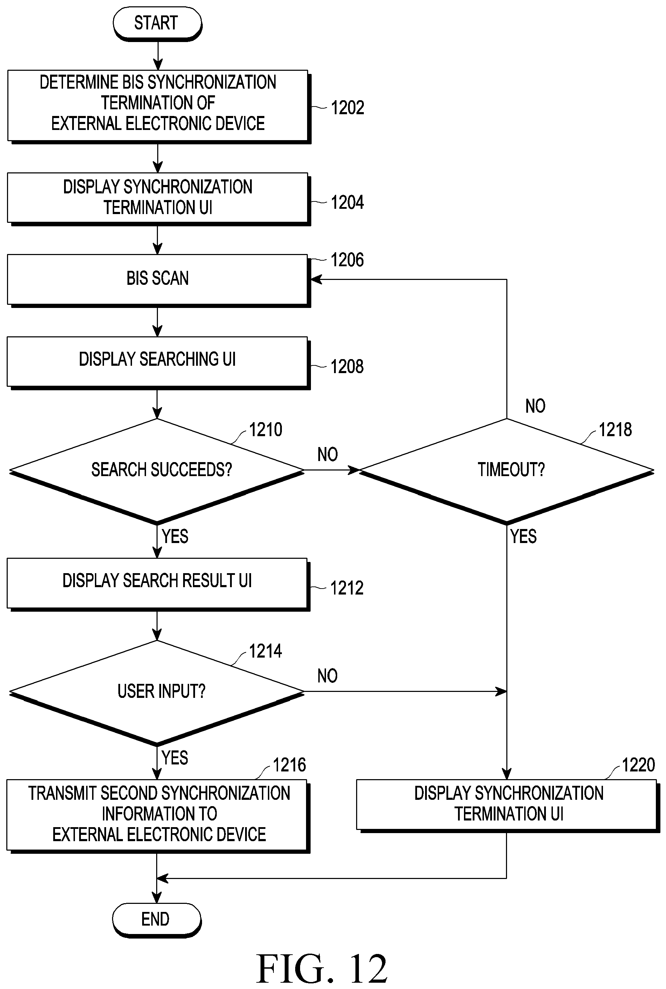

FIG. 12 is a flowchart illustrating a procedure of displaying a UI when BIS synchronization is terminated according to an embodiment of the disclosure. According to embodiments, at least one of the operations to be described below may be executed by the processor 120 of the electronic device 101 or as the processor 120 controls the communication module 190. According to embodiments, the memory 130 of the electronic device 101 may store instructions that, when executed by the processor 120, cause the electronic device 101 to perform at least one of the operations described below. According to embodiments, at least one of operations to be described below may be omitted, modified, or executed in a different order.

Referring to FIG. 12, in operation 1202, the electronic device 101 (e.g., the processor 120) may determine (e.g., identify or estimate) that BIS synchronization to the source electronic device 400 is terminated in the external electronic device (e.g., the first electronic device 202). In an embodiment, operation 1202 may correspond to operation 1008 or the procedure (e.g., operation 1102 to operation 1110) of FIG. 11.

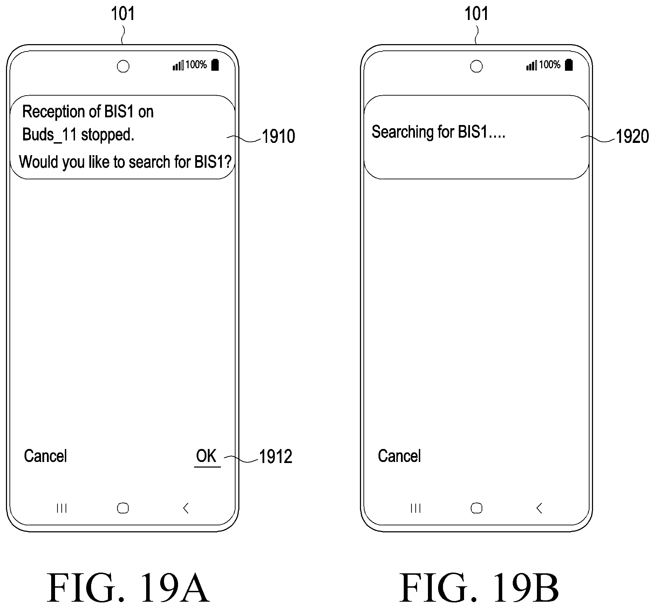

In operation 1204, the electronic device 101 (e.g., the processor 120) may display a synchronization termination UI (e.g., the synchronization termination UI 1910 of FIG. 19A) through the display module 160 based on the termination of the BIS synchronization to the source electronic device 400 in the external electronic device (e.g., the first electronic device 202). In an embodiment, the synchronization termination UI may include at least one of a notification icon, a pop-up notification, and a guide message window in the upper bar displayed through the display module 160 of the electronic device 101. In an embodiment, the synchronization termination UI may be displayed while an application related to BIS reception is not running on the electronic device 101, is running in the background, or is running in the foreground.

In operation 1206, the electronic device 101 (e.g., the processor 120) may perform a BLE scan (e.g., a BIS scan) for searching for a source electronic device (e.g., the source electronic device 400) for a BIS service. In an embodiment, operation 1206 may correspond to operation 1004. Although not shown, in an embodiment the synchronization termination UI may include an input object (e.g., the input object 1912 of FIG. 19A) for receiving a user input requesting to continue BIS reception. In an embodiment, the electronic device 101 (e.g., the processor 120) may perform the BIS scan based on receiving the user input requesting to continue receiving the BIS through the input object of the synchronization termination UI. When the user input is not received, the electronic device 101 (e.g., the processor 120) may determine termination of the BIS reception. For example, if the user input is not received, the electronic device 101 (e.g., the processor 120) may proceed to operation 1220.

In operation 1208, the electronic device 101 (e.g., the processor 120) may display a UI (e.g., the searching UI 1920 of FIG. 19B) through the display module 160 while performing the BIS scan. In an embodiment, the synchronization termination UI may include at least one of a notification icon, a pop-up notification, a guide message window, vibration, screen flickering, and LED flickering displayed through the display module 160 of the electronic device 101. In an embodiment, the searching UI may be displayed while an application related to BIS reception is not running on the electronic device 101, is running in the background, or is running in the foreground.

Although not shown, in an embodiment, the searching UI may include an input object for receiving the user input requesting to cancel the BIS reception. When receiving the user input for canceling the BIS reception through the input object, the electronic device 101 (e.g., the processor 120) may proceed to operation 1220 to determine termination of the BIS reception.

In operation 1210, the electronic device 101 (e.g., the processor 120) may determine whether the search for a source electronic device (e.g., the source electronic device 400) previously synchronized in the external electronic device (e.g., the first electronic device 202) has succeeded through the BIS scan. In an embodiment, when the electronic device 101 (e.g., the processor 120) receives EA data from the source electronic device 400 through the BIS scan and, when receiving PA data based on the EA data, determine that the BIS search has been successful. When the search for the source electronic device 400 is successful, the electronic device 101 (e.g., the processor 120) may proceed to operation 1212. On the other hand, if the search for the source electronic device 400 is not successful, the electronic device 101 (e.g., the processor 120) may proceed to operation 1218.

In operation 1218, the electronic device 101 (e.g., the processor 120) may determine whether a timeout occurs as a designated time for the BIS scan elapses. When the timeout does not occur, the electronic device 101 (e.g., the processor 120) may return to operation 1206. When the timeout occurs, the electronic device 101 (e.g., the processor 120) may proceed to operation 1220.

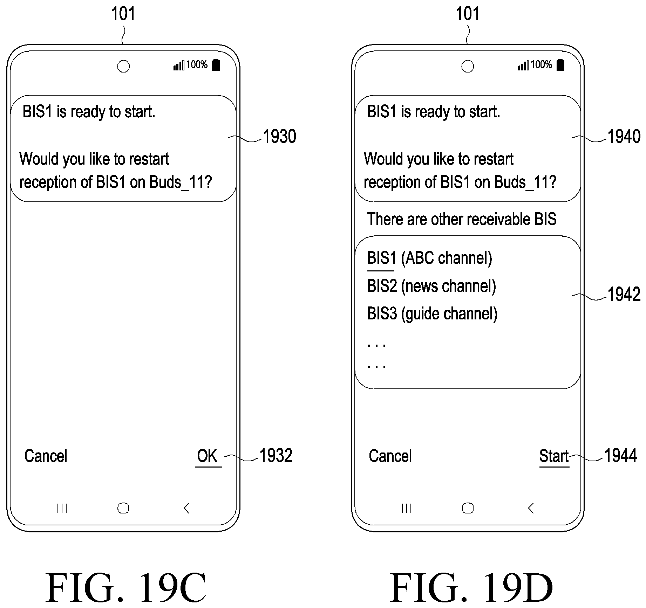

In operation 1212, the electronic device 101 (e.g., the processor 120) may display, through the display module 160, a search result UI (e.g., the search result UI 1930 of FIG. 19C) indicating that BIS synchronization to the source electronic device 400 is possible based on receiving EA data from the source electronic device 400 through the BIS scan. In an embodiment, the search result UI may include device information (e.g., the device address) of the source electronic device 400 obtained from EA data. In an embodiment, the electronic device 101 (e.g., the processor 120) may receive PA data from the source electronic device 400 based on the EA data. The search result U I may include broadcast service information (e.g., the at least one of a broadcast service name and/or a device name) about the source electronic device 400 obtained from PA data. In an embodiment, when at least one source electronic device other than the source electronic device 400 is discovered through the BIS scan, the search result UI may further include a list of the at least one other source electronic device (e.g., the broadcast channel list 1942 of FIG. 19D). In an embodiment, the search result UI may include an input object (e.g., the input object 1932 of FIG. 19C) for receiving a user input requesting to restart BIS reception by synchronizing the external electronic device (e.g., the first electronic device 202) with the source electronic device 400.

In operation 1214, the electronic device 101 (e.g., the processor 120) may determine whether the user input requesting BIS reception is received through the input object of the search result UI. When the user input is received, the electronic device 101 (e.g., the processor 120) may proceed to operation 1216. When the user input is not received, or when a user input for canceling BIS reception is received, the electronic device 101 (e.g., the processor 120) may proceed to operation 1220. In an embodiment, the electronic device 101 (e.g., the processor 120) may proceed to operation 1216 without the user input based on receiving EA data from the source electronic device 400 through the BIS scan.

In operation 1216, the electronic device 101 (e.g., the processor 120) may transmit synchronization information (e.g., the second synchronization information) obtained from EA data received through the BIS scan to the external electronic device (e.g., the first electronic device 202) through a wireless communication link (e.g., the first communication link 404). In an embodiment, the external electronic device may store the second synchronization information. In an embodiment, the external electronic device may synchronize with the source electronic device 400 using the second synchronization information and start receiving BIS data again.

In operation 1220, the electronic device 101 (e.g., the processor 120) may display a search termination UI indicating that the BIS scan is terminated and the BIS reception is terminated through the display module 160. In an embodiment, the search termination UI may include at least one of a notification icon, a pop-up notification, and a guide message window in the upper bar displayed through the display module 160 of the electronic device 101.

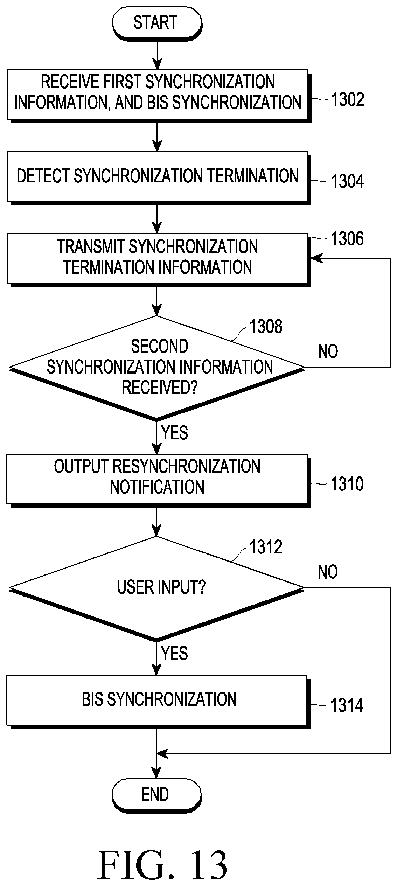

FIG. 13 is a flowchart illustrating a procedure of outputting a synchronization termination notification according to an embodiment of the disclosure. According to embodiments, at least one of the operations to be described below may be executed by the processor 310 of the first electronic device 202 or as the processor 310 controls the communication circuit 320. According to embodiments, the memory 390 of the first electronic device 202 may store instructions that, when executed by the processor 310, enable the first electronic device 202 to perform at least one of the operations described below. According to embodiments, at least one of operations to be described below may be omitted, modified, or executed in a different order.

Referring to FIG. 13, in operation 1302, the first electronic device 202 (e.g., the processor 310) may receive synchronization information (e.g., the first synchronization information of operation 1006) for BIS reception through the first communication link (e.g., the first communication link 404) with the external electronic device (e.g., the electronic device 101) and perform BIS synchronization to the source electronic device 400 based on the first synchronization information. In an embodiment, the first electronic device 202 (e.g., the processor 310) may receive PA data from the source electronic device 400 using the first synchronization information, and may receive BIS data from the source electronic device 400 after synchronizing with the source electronic device 400 using BIG parameters obtained from the PA data.

In operation 1304, the first electronic device 202 (e.g., the processor 310) may determine whether termination of BIS synchronization to the source electronic device 400 has been detected. In an embodiment, the first electronic device 202 (e.g., the processor 310) may periodically receive PA data from the source electronic device 400 after synchronizing with the source electronic device 400 based on the first synchronization information. When the reception of PA data fails for a designated time (e.g., 6 PA intervals), the first electronic device 202 (e.g., the processor 310) may determine that the termination of the BIS synchronization to the source electronic device 400 is detected. In an embodiment, when an error is continuously detected in the BIS data, the first electronic device 202 (e.g., the processor 310) may determine that the termination of the BIS synchronization to the source electronic device 400 is detected. In an embodiment, the first electronic device 202 (e.g., the processor 310) may output a synchronization termination notification (e.g., a notification sound) indicating that BIS synchronization has been terminated through the speaker 354.

In operation 1306, the first electronic device 202 (e.g., the processor 310) may transmit synchronization termination information indicating that BIS synchronization has been terminated to the electronic device 101 through the first communication link 404. The synchronization termination information may be included in a data packet (e.g., an ACL packet) of a designated format corresponding to the first communication link 404. In an embodiment, the first electronic device 202 may transmit the synchronization termination information based on receiving a synchronization termination identify request from the electronic device 101 through the first communication link 404.

In operation 1308, the first electronic device 202 (e.g., the processor 310) may determine whether synchronization information related to the source electronic device 400 (e.g., the second synchronization information of operation 1012) is received from the electronic device 101 through the first communication link 404. In an embodiment, when the second synchronization information is not received for a designated time, the first electronic device 202 (e.g., the processor 310) may proceed to operation 1306 and transmit synchronization termination information again. Although not shown, in an embodiment, when the second synchronization information is not received for a designated time or after transmitting the synchronization termination information a designated number of times, the first electronic device 202 (e.g., the processor 310) may determine that BIS reception from the source electronic device 400 is impossible and terminate the procedure. When the second synchronization information is received, the first electronic device 202 (e.g., the processor 310) may proceed to operation 1310. In an embodiment, when the second synchronization information is received, the first electronic device 202 (e.g., the processor 310) may skip operations 1310 and 1312 and proceed to operation 1314.

In operation 1310, the first electronic device 202 (e.g., the processor 310) may output a resynchronization notification (e.g., a notification sound) indicating that BIS resynchronization to the source electronic device 400 is possible based on the reception of the second synchronization information. In an embodiment, the resynchronization notification may include a designated beep sound or guide voice output through the speaker 354.

In operation 1312, the first electronic device 202 (e.g., the processor 310) may determine whether the user input requesting BIS reception is received after outputting the resynchronization notification. In an embodiment, the user input may include at least one of a single touch, a double touch, a triple touch, a tap-and-hold, or a double tap-and-hold on the input device 330 (e.g., a touch pad). When the user input is received, the first electronic device 202 (e.g., the processor 310) may proceed to operation 1314. When the user input is not received, or when the user input for canceling the BIS reception is received, the first electronic device 202 (e.g., the processor 310) may terminate the procedure.

In operation 1314, the first electronic device 202 (e.g., the processor 310) may be synchronized with the source electronic device 400 using the second synchronization information. In an embodiment, the first electronic device 202 (e.g., the processor 310) may receive PA data from the source electronic device 400 using the second synchronization information, and may receive BIS data from the source electronic device 400 after synchronizing with the source electronic device 400 using BIG parameters obtained from the PA data. The first electronic device 202 (e.g., the processor 310) may convert the BIS data into sound data and output the sound data to the speaker 354.

In an embodiment, the first electronic device 202 (e.g., the processor 310) may output a resynchronization complete notification (e.g., a notification sound) based on being resynchronized with the source electronic device 400. In an embodiment, the resynchronization complete notification may include a designated beep sound or guide voice output through the speaker 354.

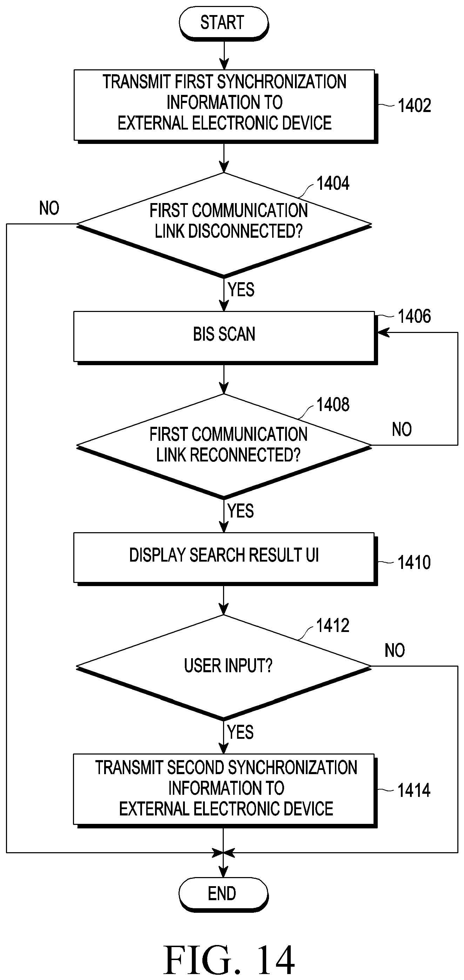

FIG. 14 is a flowchart illustrating a procedure of performing a BIS scan when a first communication link is disconnected according to an embodiment of the disclosure. According to embodiments, at least one of the operations to be described below may be executed by the processor 120 of the electronic device 101 or as the processor 120 controls the communication module 190. According to embodiments, the memory 130 of the electronic device 101 may store instructions that, when executed by the processor 120, cause the electronic device 101 to perform at least one of the operations described below. According to embodiments, at least one of operations to be described below may be omitted, modified, or executed in a different order.

Referring to FIG. 14, in operation 1402, the electronic device 101 (e.g., the processor 120) may transmit synchronization information (e.g., the first synchronization information) related to the source electronic device 400 to the external electronic device (e.g., the first communication link 404) through the first communication link with the external electronic device (e.g., the first electronic device 202). In an embodiment, the first synchronization information may be included in the LL_PERIODIC_SYNC_IND packet transferred through the first communication link 404 (e.g., the LE-ACL link). In an embodiment, the electronic device 101 may transmit the first synchronization information to an external electronic device (e.g., the first electronic device 202) to allow the external electronic device (e.g., the first electronic device 202) to perform BIS synchronization to the source electronic device 400 based on the first synchronization information.

In operation 1404, the electronic device 101 (e.g., the processor 120) may determine whether the first communication link 404 with the external electronic device (e.g., the first electronic device 202) is disconnected. In an embodiment, the electronic device 101 (e.g., the processor 120) may determine that the first communication link 404 is disconnected if a corresponding response packet (e.g., the ack packet or N packet) is not received for a designated time after transferring the packet (e.g., the data packet, the control packet, or the P packet) transferred through the first communication link 404. When it is determined that the first communication link 404 is disconnected, the electronic device 101 (e.g., the processor 120) may proceed to operation 1406. When the first communication link 404 is not disconnected, the electronic device 101 (e.g., the processor 120) may terminate the procedure. According to an embodiment, the electronic device 101 (e.g., the processor 120) may perform an operation (e.g., operation 1404) of determining whether the first communication link 404 with the external electronic device (e.g., the first electronic device 202) is disconnected periodically or at a designated time.

In operation 1406, the electronic device 101 (e.g., the processor 120) may perform the BIS scan to receive advertising data for the source electronic device 400 previously synchronized with the external electronic device (e.g., the first electronic device 202) based on identifying disconnection of the first communication link 404 in a state in which the external electronic device (e.g., the first electronic device 202) is synchronized with the source electronic device 400. In an embodiment, the BIS scan may include an EA scan in which the electronic device 101 (e.g., the processor 120) performs a BLE scan to receive advertising data and identifies that the advertising data includes EA data for the BIS service of the source electronic device 400 previously received by the external electronic device and/or a PA scan that monitors the reception of PA data based on the EA data. In an embodiment, the electronic device 101 (e.g., the processor 120) may perform the BIS scan for a designated time.

In an embodiment, the electronic device 101 (e.g., the processor 120) may perform the BIS scan based on a user input. The electronic device 101 (e.g., the processor 120) may perform an EA scan based on receiving a user input for selecting a search for a BLE-based audio broadcast, and may perform a PA scan based on obtaining EA data through the EA scan. The electronic device 101 (e.g., the processor 120) may obtain broadcast service information from the PA data received through the PA scan and display a broadcast channel list including the broadcast service information. Based on receiving a user input for selecting the broadcast service information through the broadcast channel list, the electronic device 101 (e.g., the processor 120) may proceed to operation 1408 or operation 1410.

In an embodiment, the electronic device 101 (e.g., the processor 120) may receive the EA data from the source electronic device 400 through the EA scan and obtain second synchronization information for use in receiving PA data from the source electronic device 400 from the EA data. In an embodiment, the second synchronization information may include parameters that are the same as or at least partially different from the first synchronization information.

In an embodiment, the electronic device 101 (e.g., the processor 120) may compare the Broadcast_ID included in the EA data with the Broadcast_ID related to the BIS service of the source electronic device 400 previously received by the external electronic device and identify whether they match and, if matched, perform the PA scan based on the EA data. The electronic device 101 (e.g., the processor 120) may display broadcast service information related to the BIS service based on the BIG information received through the PA scan.

In operation 1408, the electronic device 101 (e.g., the processor 120) may determine whether the first communication link 404 is reconnected. In an embodiment, the electronic device 101 (e.g., the processor 120) may attempt to reconnect the first communication link 404 for a designated time after identifying disconnection of the first communication link 404. When the first communication link 404 is not reconnected, the electronic device 101 (e.g., the processor 120) may proceed to operation 1406, continuously performing the BIS scan for a designated time or a designated number of times. When it is determined that the first communication link 404 is reconnected, the electronic device 101 (e.g., the processor 120) may proceed to operation 1410. In an embodiment, the electronic device 101 (e.g., the processor 120) may attempt to reconnect the first communication link 404 when identifying disconnection of the first communication link 404 and, when the first communication link 404 is reconnected, perform the BIS scan (e.g., operation 1406).

In operation 1410, the electronic device 101 (e.g., the processor 120) may display a search result UI indicating that BIS synchronization to the source electronic device 400 is possible based on obtaining the second synchronization information. In an embodiment, the search result UI may include broadcast service information (e.g., the at least one of a broadcast service name and/or a device name) about the source electronic device 400 obtained from EA data.

In operation 1412, the electronic device 101 (e.g., the processor 120) may determine whether the user input requesting BIS reception is received through the search result UI. When the user input is received, the electronic device 101 (e.g., the processor 120) may proceed to operation 1414. When the user input is not received, or when the user input for canceling the BIS reception is received, the electronic device 101 (e.g., the processor 120) may terminate the procedure. In an embodiment, at least one of operation 1410 or operation 1412 may be omitted. In an embodiment, the electronic device 101 (e.g., the processor 120) may receive EA data from the source electronic device 400 through the EA scan after identifying reconnection of the first communication link.

In operation 1414, the electronic device 101 (e.g., the processor 120) may transmit the second synchronization information obtained from the EA data to the external electronic device (e.g., the first electronic device 202) through the reconnected first communication link 404. In an embodiment, the electronic device 101 may transmit the second synchronization information to an external electronic device (e.g., the first electronic device 202) to allow the external electronic device (e.g., the first electronic device 202) to perform BIS synchronization to the source electronic device 400 based on the second synchronization information.

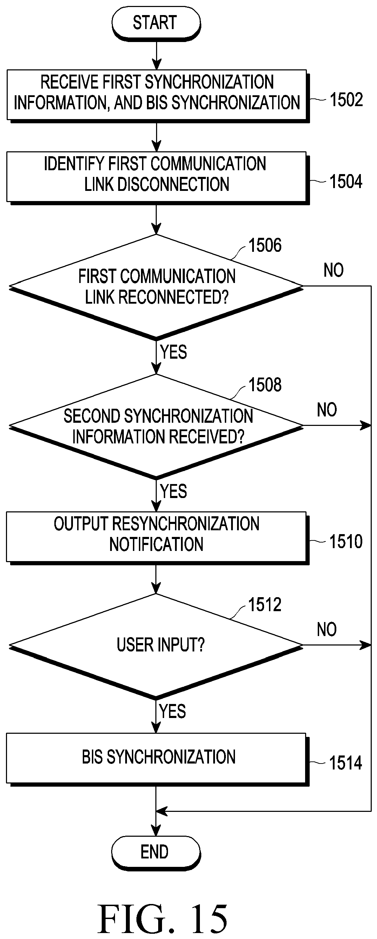

FIG. 15 is a flowchart illustrating a procedure of receiving synchronization information through a reconnected first communication link according to an embodiment of the disclosure. According to embodiments, at least one of the operations to be described below may be executed by the processor 310 of the first electronic device 202 or as the processor 310 controls the communication circuit 320. According to embodiments, the memory 390 of the first electronic device 202 may store instructions that, when executed by the processor 310, enable the first electronic device 202 to perform at least one of the operations described below. According to embodiments, at least one of the operations to be described below may be omitted, modified, or executed in a different order.

Referring to FIG. 15, in operation 1502, the first electronic device 202 (e.g., the processor 310) may receive synchronization information (e.g., the first synchronization information of operation 1402) for BIS reception through the first communication link (e.g., the first communication link 404) with the external electronic device (e.g., the electronic device 101) and perform BIS synchronization to the source electronic device 400 based on the first synchronization information. In an embodiment, the first electronic device 202 (e.g., the processor 310) may perform a PA scan based on the first synchronization information to receive PA data from the source electronic device 400, and may be synchronized with the source electronic device 400 based on the PA data. After synchronization, the first electronic device 202 (e.g., the processor 310) may receive BIS data from the source electronic device 400.

In operation 1504, the first electronic device 202 (e.g., the processor 310) may identify that the first communication link 404 is disconnected. In an embodiment, the first electronic device 202 (e.g., the processor 310) may determine that the first communication link 404 is disconnected when a packet (e.g., the data packet, a control packet, or a P packet) is not received through the first communication link 404 for a designated time. In an embodiment, the first electronic device 202 (e.g., the processor 310) may stop BIS synchronization (e.g., the reception of PA data and BIS data) to the source electronic device 400 based on identifying disconnection of the first communication link 404 and proceed to operation 1506.

In an embodiment, the first electronic device 202 (e.g., the processor 310) may maintain BIS synchronization (e.g., the reception of PA data and BIS data) to the source electronic device 400 even after the first communication link 404 is disconnected. In an embodiment, the first electronic device 202 (e.g., the processor 310) may determine whether BIS synchronization to the source electronic device 400 is terminated after the first communication link 404 is disconnected. When the reception of PA data fails for a designated time (e.g., 6 PA intervals) in an embodiment, the first electronic device 202 (e.g., the processor 310) may determine that BIS synchronization to the source electronic device 400 has been terminated. In an embodiment, when the first communication link 404 is disconnected and the BIS synchronization termination is detected, the first electronic device 202 (e.g., the processor 310) may proceed to operation 1506.

In operation 1506, the first electronic device 202 (e.g., the processor 310) may determine whether the first communication link 404 is reconnected. In an embodiment, the first electronic device 202 (e.g., the processor 310) may attempt to reconnect the first communication link 404 for a designated time or a designated number of times after identifying that the first communication link 404 is disconnected. When the first communication link 404 is not reconnected, the electronic device 101 (e.g., the processor 120) may continue to attempt to reconnect the first communication link 404 in operation 1506. When the first communication link 404 is reconnected, the first electronic device 202 (e.g., the processor 310) may proceed to operation 1508.

In operation 1508, the first electronic device 202 (e.g., the processor 310) may determine whether synchronization information related to the source electronic device 400 (e.g., the second synchronization information of operation 1414) is received from the electronic device 101 through the reconnected first communication link 404. In an embodiment, when the second synchronization information is not received for a designated time, the first electronic device 202 (e.g., the processor 310) may terminate the procedure. When the second synchronization information is received, the first electronic device 202 (e.g., the processor 310) may proceed to operation 1510. In an embodiment, when the second synchronization information is received, the first electronic device 202 (e.g., the processor 310) may skip operations 1510 and 1512 and proceed to operation 1514.

In operation 1510, the first electronic device 202 (e.g., the processor 310) may output a resynchronization notification (e.g., a notification sound) indicating that resynchronization to the source electronic device 400 is possible based on the reception of the second synchronization information. In an embodiment, the resynchronization notification may include a designated beep sound or guide voice output through the speaker 354.

In operation 1512, the first electronic device 202 (e.g., the processor 310) may determine whether the user input requesting BIS reception is received after outputting the resynchronization notification. In an embodiment, the user input may include at least one of a single touch, a double touch, a triple touch, a tap-and-hold, or a double tap-and-hold on the input device 330 (e.g., a touch pad). When the user input is received, the first electronic device 202 (e.g., the processor 310) may proceed to operation 1514. When the user input is not received, or when the user input for canceling the BIS reception is received, the first electronic device 202 (e.g., the processor 310) may terminate the procedure.

In operation 1514, the first electronic device 202 (e.g., the processor 310) may be synchronized with the source electronic device 400 using the second synchronization information. In an embodiment, the first electronic device 202 (e.g., the processor 310) may receive PA data from the source electronic device 400 using the second synchronization information, and may receive BIS data from the source electronic device 400 after synchronizing with the source electronic device 400 using BIG parameters obtained from the PA data.

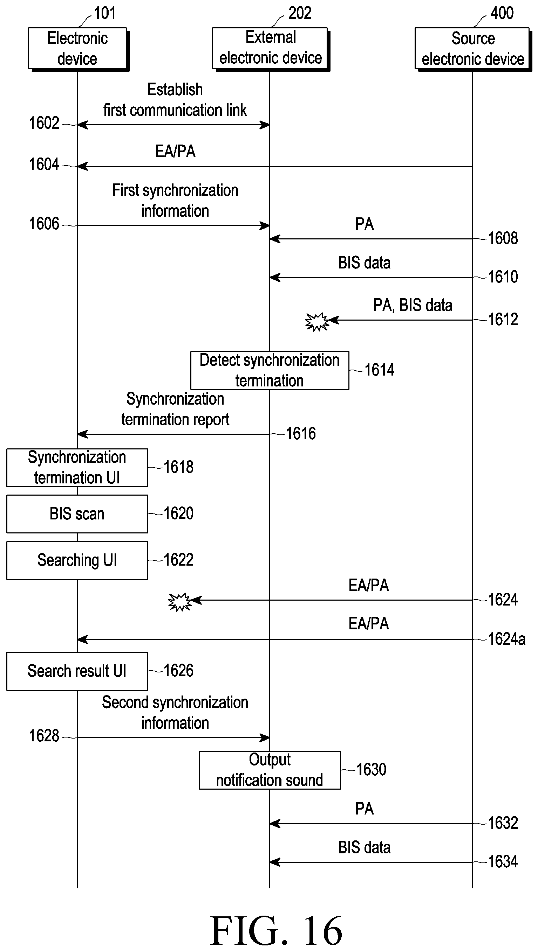

FIG. 16 is a sequence diagram illustrating a procedure of recovering BIS synchronization according to an embodiment of the disclosure. According to embodiments, at least one of operations to be described below may be omitted, modified, or executed in a different order.

Referring to FIG. 16, in operation 1602, the electronic device 101 may establish a first communication link (e.g., the first communication link 404) with an external electronic device 202 (e.g., the first electronic device 202). In operation 1604, the electronic device 101 may receive EA data and/or PA data (e.g., the EA/PA data) from the source electronic device 400 by performing a BLE scan (e.g., a BIS scan) to operate as a BIS assistant for the external electronic device 202.

In operation 1606, the electronic device 101 may transmit synchronization information (e.g., the first synchronization information) obtained from the EA data to the external electronic device 202 through the first communication link 404. After transmitting the first synchronization information, the electronic device 101 may store information indicating that the external electronic device 202 is synchronized with the source electronic device 400. In operation 1608, the external electronic device 202 may receive PA data from the source electronic device 400 using the first synchronization information. In operation 1610, the external electronic device 202 may receive BIS data from the source electronic device 400 using BIG parameters obtained from the PA data.

In operation 1612, the external electronic device 202 may fail to receive at least one of PA data or BIS data. In operation 1614, the external electronic device 202 may detect that BIS synchronization to the source electronic device 400 has been terminated based on the failure to receive at least one of PA data or BIS data. In an embodiment, the external electronic device 202 may determine that BIS synchronization has been terminated based on the failure to receive PA data for a designated time or a designated number of times. In operation 1616, the external electronic device 202 may transmit a synchronization termination report to the electronic device 101 through the first communication link. The synchronization termination report may include a data packet (e.g., an ACL packet) of a designated format indicating that BIS synchronization has been terminated.

In operation 1618, the electronic device 101 may display a synchronization termination UI (e.g., the synchronization termination UI 1910 of FIG. 19A) based on receiving the synchronization termination report. In an embodiment, operation 1618 may be omitted, and the electronic device 101 may proceed to operation 1620 after receiving the synchronization termination report. In operation 1620, the electronic device 101 may start the BIS scan for receiving EA data (and PA data) from the source electronic device 400 based on receiving the synchronization termination report. In operation 1622, the electronic device 101 may display a searching UI (e.g., the searching UI 1920 of FIG. 19B) while performing the BIS scan. In an embodiment, operation 1622 may be omitted, and the electronic device 101 may execute the BIS scan in the background.

Here, it is illustrated that the electronic device 101 performs the BIS scan after displaying the synchronization termination UI, but the electronic device 101 may perform the BIS scan while displaying the synchronization termination UI. In an embodiment, when EA data is not received through the BIS scan after performing the BIS scan for a designated time, the electronic device 101 may display the synchronization termination UI. The electronic device 101 may continuously perform the BIS scan based on receiving a user input requesting to continue the BIS scan through the synchronization termination UI.

In an embodiment, when performing the BIS scan in operation 1620, the electronic device 101 may use other scan parameters than those of the BIS scan in operation 1604, such as a scan type, a scan interval, a scan window, a scan filter policy, or a scan duty. In an embodiment, the electronic device 101 may perform a full scan for a designated time T1 in operation 1620. The designated time T1 may be shorter than the time during which the BIS scan is performed in operation 1604. The full scan may include an operation of monitoring the reception of advertising data through multiple advertising channels (e.g., the Adv_id=37, 38, and 39) used to transmit EA data (e.g., the ADV_EXT_IND packet) for the designated time T1.

In an embodiment, the electronic device 101 may repeatedly perform the BIS scan in operation 1620 while changing the scan parameters, every designated change period, for a time longer than the time when the BIS scan is performed in operation 1604. In an embodiment, the electronic device 101 may scan all advertising channels available for the designated time T1, and repeatedly perform the BIS scan every designated period while changing the scan parameters after the designated time T2.

In operation 1624, the source electronic device 400 broadcasts EA data, but the electronic device 101 may not receive EA data when it is out of the signal coverage of the source electronic device 400. In an embodiment, when EA data related to the source electronic device 400 is not received for a designated time, the electronic device 101 may display a search failure UI including a first input object indicating stop search interruption and a second input object indicating continue search. The electronic device 101 may stop the BIS scan based on the reception of a user input through the first input object. The electronic device 101 may continue the BIS scan based on the reception of a user input through the second input object.

In operation 1624a, the electronic device 101 may receive EA data from the source electronic device 400 as it re-enters the signal coverage of the source electronic device 400. In an embodiment, when the electronic device 101 identifies that the broadcast_ID included in the EA data matches the broadcast_ID of the EA data received in operation 1604, the electronic device 101 may proceed to operation 1626 or operation 1628. In an embodiment, when the broadcast_ID included in the EA data does not match the broadcast_ID of the EA data received in operation 1604, the electronic device 101 may display broadcast service information about the new BIS related to the EA data and accept or reject the new BIS according to the user input.

In an embodiment, when the electronic device 101 fails to receive the EA data even though the BIS scan has been performed for a designated time, the electronic device 101 may display the synchronization termination UI again to inquire the user whether to continue the BIS scan.

In operation 1626, the electronic device 101 may display a search result UI (e.g., the search result UI 1930 of FIG. 19C) indicating that BIS synchronization to the source electronic device 400 is possible based on receiving the EA data. In an embodiment, operation 1626 may be omitted, and the electronic device 101 may proceed to operation 1628 after receiving the EA data. In operation 1628, the electronic device 101 may transmit synchronization information (e.g., the second synchronization information) obtained from the EA data to the external electronic device 202 through the first communication link 404. In an embodiment, the electronic device 101 may transmit the second synchronization information to the external electronic device 202 based on receiving the user input requesting BIS reception through the search result UI. In an embodiment, after transmitting the second synchronization information, the electronic device 101 may display a UI indicating that BIS reception starts again in the external electronic device 202.

In operation 1630, the external electronic device 202 may output a notification (e.g., a notification sound) indicating that BIS resynchronization to the source electronic device 400 is possible based on receiving the second synchronization information. In an embodiment, after outputting the notification, the external electronic device 202 may proceed to operation 1632 based on receiving the user input (e.g., a double touch) requesting BIS resynchronization. In an embodiment, operation 1630 and/or the user input may be omitted, and the external electronic device 202 may proceed to operation 1632 based on receiving the second synchronization information.

In operation 1632, the external electronic device 202 may receive PA data from the source electronic device 400 using the second synchronization information. In operation 1634, the external electronic device 202 may receive BIS data from the source electronic device 400 using BIG parameters obtained from the PA data.

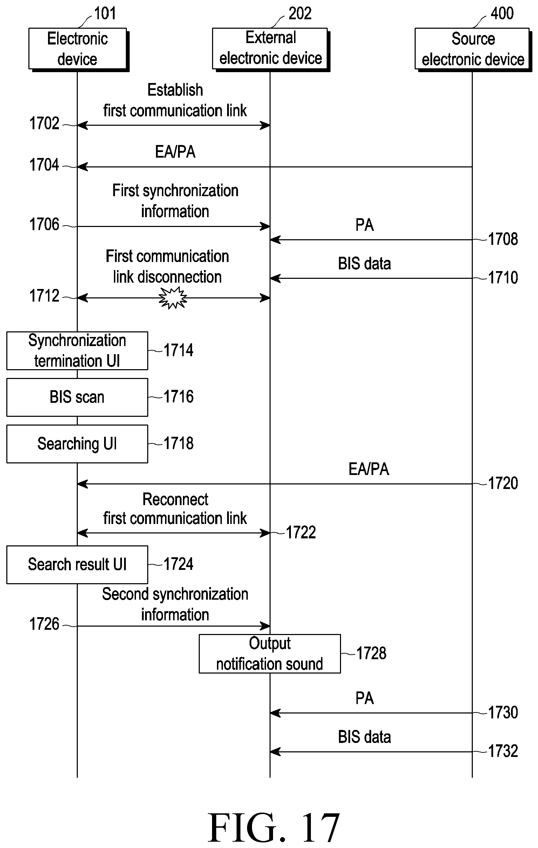

FIG. 17 is a sequence diagram illustrating a procedure of recovering BIS synchronization when a first communication link is reconnected according to an embodiment of the disclosure. According to embodiments, at least one of operations to be described below may be omitted, modified, or executed in a different order.

Referring to FIG. 17, in operation 1702, the electronic device 101 may establish a first communication link (e.g., the first communication link 404) with an external electronic device 202 (e.g., the first electronic device 202). In operation 1704, the electronic device 101 may receive EA data and/or PA data (e.g., the EA/PA data) from the source electronic device 400 by performing a BLE scan (e.g., a BIS scan) to operate as a BIS assistant for the external electronic device 202.

In operation 1706, the electronic device 101 may transmit synchronization information (e.g., the first synchronization information) obtained from the EA data to the external electronic device 202 through the first communication link 404. In operation 1708, the external electronic device 202 may receive PA data from the source electronic device 400 using the first synchronization information. In operation 1710, the external electronic device 202 may receive BIS data from the source electronic device 400 using BIG parameters obtained from the PA data.

In operation 1712, the electronic device 101 may detect disconnection of the first communication link 404 with the external electronic device 202. In operation 1714, the electronic device 101 may display a synchronization termination UI (e.g., the synchronization termination UI 1910 of FIG. 19A) based on detecting disconnection of the first communication link 404 while the external electronic device 202 is synchronized with the source electronic device 400. In an embodiment, operation 1714 may be omitted, and the electronic device 101 may proceed to operation 1716 after receiving the synchronization termination report.

In operation 1716, the electronic device 101 may start a BIS scan for receiving EA data (and PA data) from the source electronic device 400 based on detecting disconnection of the first communication link 404 while being synchronized with the source electronic device 400. In operation 1718, the electronic device 101 may display a searching UI (e.g., the searching UI 1920 of FIG. 19B) while performing the BIS scan. In an embodiment, operation 1718 may be omitted, and the electronic device 101 may execute the BIS scan in the background.

Here, it is illustrated that the electronic device 101 performs the BIS scan after displaying the synchronization termination UI, but the electronic device 101 may perform the BIS scan while displaying the synchronization termination UI. In an embodiment, when EA data is not received through the BIS scan after performing the BIS scan for a designated time or a designated number of times, the electronic device 101 may display the synchronization termination UI. The electronic device 101 may continuously perform the BIS scan based on receiving a user input requesting to continue the BIS scan through the synchronization termination UI.

In an embodiment, when performing the BIS scan in operation 1716, the electronic device 101 may use other scan parameters than those of the BIS scan in operation 1704, such as a scan type, a scan interval, a scan window, a scan filter policy, or a scan duty. In an embodiment, the electronic device 101 may perform a full scan for a designated time T1 in operation 1716. The designated time T1 may be shorter than the time during which the BIS scan is performed in operation 1704. The full scan may include an operation of monitoring the reception of advertising data through all advertising channels for the designated time T1.

In an embodiment, the electronic device 101 may repeatedly perform the BIS scan in operation 1716 while changing the scan parameters every designated change period according to a time (e.g., a longer scan window or a longer scan interval) different from the time (e.g., the scan window or scan interval) when the BIS scan in operation 1704 is performed. In an embodiment, the electronic device 101 may scan all advertising channels for the designated time T1, and repeatedly perform the BIS scan every designated period while changing the scan parameters after the designated time T2.

In an embodiment, the electronic device 101 may perform the BIS scan on the source electronic device 400 after identifying the source electronic device 400 through an inquiry signal. For example, the source electronic device 400 may broadcast an inquiry signal indicating that the source electronic device 400 is operating. The electronic device 101 may receive the inquiry signal as it enters the signal coverage of the source electronic device 400, and perform the BIS scan for synchronization with the source electronic device 400 based on the reception of the inquiry signal.

In operation 1720, the electronic device 101 may receive EA data from the source electronic device 400 as it re-enters the signal coverage of the source electronic device 400. In an embodiment, when EA data related to the source electronic device 400 is not received for a designated time, the electronic device 101 may display a search failure UI including a first input object indicating stop search interruption and a second input object indicating continue search. The electronic device 101 may stop the BIS scan based on the reception of a user input through the first input object. The electronic device 101 may continue the BIS scan based on the reception of a user input through the second input object.

In operation 1722, the electronic device 101 may identify that the first communication link is reconnected. In operation 1724, the electronic device 101 may receive the EA data and display a search result UI (e.g., the search result UI 1930 of FIG. 19C) indicating that BIS synchronization to the source electronic device 400 is possible based on identifying that the first communication link is reconnected. Here, it is illustrated that the first communication link is reconnected after starting the BIS scan, but in an embodiment, the electronic device 101 may receive EA data through the BIS scan after reconnecting the first communication link.

In operation 1726, the electronic device 101 may receive the EA data and transmit synchronization information (e.g., the second synchronization information) obtained from the EA data to the external electronic device 202 through the reconnected first communication link 404 based on identifying that the first communication link is reconnected. In an embodiment, the electronic device 101 may transmit the second synchronization information to the external electronic device 202 based on receiving the user input requesting BIS reception through the search result UI. In an embodiment, after transmitting the second synchronization information, the electronic device 101 may display a UI indicating that BIS reception starts again in the external electronic device 202.

In an embodiment, the external electronic device 202 may maintain the BIS synchronization to the source electronic device 400 after the first communication link is disconnected. When the BIS synchronization to the source electronic device 400 is maintained until the first communication link is reconnected, the external electronic device 202 may transmit information indicating that the BIS synchronization to the source electronic device 400 is maintained through the reconnected communication link to the electronic device 101. The electronic device 101 may not transmit the second synchronization information based on receiving the information.

In operation 1728, the external electronic device 202 may output a notification sound indicating that BIS resynchronization to the source electronic device 400 is possible based on receiving the second synchronization information.

In operation 1730, the external electronic device 202 may receive PA data from the source electronic device 400 using the second synchronization information. In operation 1732, the external electronic device 202 may receive BIS data from the source electronic device 400 using BIG parameters obtained from the PA data. In an embodiment, the external electronic device 202 may maintain the BIS synchronization to the source electronic device 400 even after the first communication link is disconnected in operation 1712. In an embodiment, the external electronic device 202 may disregard the second synchronization information received in operation 1726 when the BIS synchronization to the source electronic device 400 is not terminated.

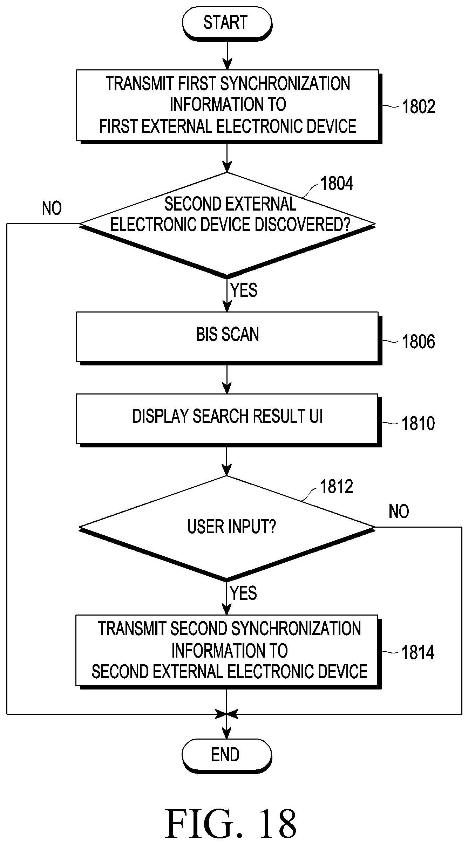

FIG. 18 is a flowchart illustrating a procedure of synchronizing another sink device according to an embodiment of the disclosure. According to embodiments, at least one of the operations to be described below may be executed by the processor 120 of the electronic device 101 or as the processor 120 controls the communication module 190. According to embodiments, the memory 130 of the electronic device 101 may store instructions that, when executed by the processor 120, cause the electronic device 101 to perform at least one of the operations described below. According to embodiments, at least one of operations to be described below may be omitted, modified, or executed in a different order.

Referring to FIG. 18, in operation 1802, the electronic device 101 (e.g., the processor 120) may transmit synchronization information (e.g., the first synchronization information) related to the source electronic device 400 to the external electronic device (e.g., the first communication link 404) through the first communication link with the first external electronic device (e.g., the first electronic device 202). In an embodiment, the electronic device 101 may transmit the first synchronization information to the first external electronic device (e.g., the first electronic device 202) to allow the first external electronic device (e.g., the first electronic device 202) to perform BIS synchronization to the source electronic device 400 based on the first synchronization information.

In operation 1804, the electronic device 101 (e.g., the processor 120) may determine whether a second external electronic device (e.g., the second electronic device 204) is discovered. In an embodiment, the electronic device 101 (e.g., the processor 120) may discover the presence of the second external electronic device (e.g., the second electronic device 204) by receiving an advertising signal broadcast from the second external electronic device (e.g., the second electronic device 204) while the first external electronic device (e.g., the first electronic device 202) is synchronized with the source electronic device 400. When no other external electronic device is discovered, the electronic device 101 (e.g., the processor 120) may terminate the procedure.

When the second external electronic device (e.g., the second electronic device 204) is discovered, the electronic device 101 (e.g., the processor 120) may proceed to operation 1806, with the second external electronic device (e.g., the second electronic device 204). In an embodiment, the electronic device 101 (e.g., the processor 120) may establish a second communication link (e.g., the second communication link 406) with the second external electronic device (e.g., the second electronic device 204) based on discovery of the second external electronic device (e.g., the second electronic device 204).

In operation 1806, the electronic device 101 (e.g., the processor 120) may perform the BIS scan to receive EA data and PA data for the source electronic device 400 synchronized with the first external electronic device (e.g., the first electronic device 202) based on discovery the second external electronic device (e.g., the second electronic device 204) in a state in which the first external electronic device (e.g., the first electronic device 202) is synchronized with the source electronic device 400. In an embodiment, the electronic device 101 (e.g., the processor 120) may perform the BIS scan based on identifying that the newly discovered second external electronic device (e.g., the second electronic device 204), together with the first external electronic device (e.g., the first electronic device 202), is a pair of ear-wearable devices.

In an embodiment, the BIS scan may include an EA scan in which the electronic device 101 (e.g., the processor 120) performs a BLE scan to receive advertising data and identifies that the advertising data includes EA data for the BIS service of the source electronic device 400 and a PA scan that receives the PA data based on the EA data. In an embodiment, the electronic device 101 (e.g., the processor 120) may perform the BIS scan for a designated time.

In an embodiment, the electronic device 101 (e.g., the processor 120) may receive the EA data from the source electronic device 400 through the EA scan and obtain second synchronization information for use in receiving PA data from the source electronic device 400 from the EA data. In an embodiment, the second synchronization information may include parameters that are the same as or at least partially different from the first synchronization information.

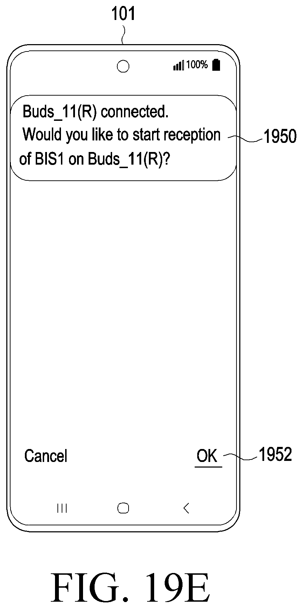

In operation 1810, the electronic device 101 (e.g., the processor 120) may display an add device UI (e.g., the add device UI 1950 of FIG. 19E) including the search result based on receiving the EA data 402. In an embodiment, the add device UI may include service information (e.g., at least one of the broadcast service name and/or device name) about the source electronic device 400 obtained from the EA data and/or device information about the first external electronic device (e.g., the second electronic device 204).

In operation 1812, the electronic device 101 (e.g., the processor 120) may determine whether a user input requesting BIS reception through the second external electronic device (e.g., the second electronic device 204) is received through the search result UI. When the user input is received, the electronic device 101 (e.g., the processor 120) may proceed to operation 1814. When the user input is not received, or when the user input for canceling the BIS reception is received, the electronic device 101 (e.g., the processor 120) may terminate the procedure. In an embodiment, at least one of operation 1810 or operation 1812 may be omitted.

In operation 1814, the electronic device 101 (e.g., the processor 120) may transmit the second synchronization information to the second external electronic device (e.g., the second electronic device 204) through the second communication link 406. In an embodiment, the electronic device 101 may transmit the second synchronization information to the second external electronic device (e.g., the second electronic device 204) to allow the second external electronic device (e.g., the second electronic device 204) to perform BIS synchronization to the source electronic device 400 based on the second synchronization information.

FIGS. 19A, 19B, 19C, 19D, and 19E are views illustrating examples of Uls according to an embodiment of the disclosure. Although Uls according to detection of the termination of BIS synchronization are illustrated herein, these are merely examples, and embodiments of the disclosure are not limited to these examples.

Referring to FIG. 19A, the electronic device 101 may display, through the display module 160, a synchronization termination UI 1910 based on determining that BIS synchronization is terminated in the external electronic device (e.g., the first electronic device 202). In an embodiment, the synchronization termination UI 1910 may include at least one of a notification icon, a pop-up notification, and a guide message window in the upper bar displayed through the display module 160 of the electronic device 101.

In an embodiment, the electronic device 101 may display a notification icon (not shown) indicating BIS synchronization termination in the upper bar and, based on reception of a user input (e.g., a touch) on the notification icon, display the synchronization termination UI 1910. In an embodiment, the synchronization termination UI 1910 may include the device name (e.g., "Buds_11") of the external electronic device (e.g., the first electronic device 202) and/or broadcast service information (e.g., the broadcast service name "BIS1") related to the source electronic device 400. In an embodiment, the synchronization termination UI 1910 may include a guide phrase "Reception of BIS1 at Buds_11 has been stopped. Would you like to search for BIS1 again?"

In an embodiment, the synchronization termination UI 1910 may include an input object 1912 for receiving a user input requesting to continue BIS reception. In an embodiment, the electronic device 101 may perform a BIS scan for discovering the source electronic device 400 synchronized with the external electronic device (e.g., the first electronic device 202) based on receiving a user input (e.g., a touch) through the input object 1912 of the synchronization termination UI 1910.

Referring to FIG. 19B, the electronic device 101 may display a searching UI 1920 through the display module 160 while performing the BIS scan. In an embodiment, the searching UI 1920 may include broadcast service information (e.g., broadcast service name "BIS1") related to the source electronic device 400. The searching UI 1920 may include at least one of a notification icon, a pop-up notification, a guide message window, vibration, screen flickering, and LED flickering in the upper bar. In an embodiment, the searching UI1920 may be displayed for a designated time and then disappear automatically (e.g., without a user input). In an embodiment, the electronic device 101 may display the synchronization termination UI 1910 when failing to receive EA data from the source electronic device 400 for a designated time.

Referring to FIG. 19C, the electronic device 101 may display, through the display module 160, a search result UI 1930 based on receiving the EA data and PA data from the source electronic device 400 through the BIS scan. In an embodiment, the search result UI 1920 may include broadcast service information(e.g., broadcast service name "BIS1") related to the source electronic device 400 and/or the device name (e.g., "Buds_11") of the external electronic device (e.g., the first electronic device 202). In an embodiment, the search result UI 1930 may include a guide phrase, "BIS1 is ready to restart. Would you like to restart reception of BIS1 on Buds_11?" The search result UI 1930 may include at least one of a notification icon, a pop-up notification, or a guide message window in the upper bar.

In an embodiment, the search result UI 1910 may include an input object 1932 for receiving a user input requesting to restart BIS reception by synchronizing the external electronic device (e.g., the first electronic device 202) with the source electronic device 400. In an embodiment, the electronic device 101 may transmit, to the external electronic device (e.g., the first electronic device 202), second synchronization information obtained from the EA data based on receiving a user input (e.g., a touch) through the input object 1932 of the search result UI 1930.

Referring to FIG. 19D, the electronic device 101 may display, through the display module 160, the search result UI 1940 including a broadcast channel list 1942 based on discovery of one or more BIS sources including the source electronic device 400 through the BIS scan. In an embodiment, the broadcast channel list 1942 may include broadcast service information (e.g., the broadcast service name "BIS1 (ABC channel), BIS2 (news channel), and BIS3 (guide channel)") one or more of which are related to the BIS sources. In an embodiment, the electronic device 101 may highlight (e.g., in bold, by outlining, and/or by shading) the item (e.g., "BIS1") corresponding to the source electronic device 400 previously synchronized with the external electronic device (e.g., the first electronic device 202) while displaying the broadcast channel list 1942. The search result UI 1940 may include at least one of a notification icon, a pop-up notification, and a guide message window in the upper bar displayed through the display module 160 of the electronic device 101. The electronic device 101 may receive a user input for selecting a broadcast channel desired to be received by the user while displaying the broadcast channel list 1942.

In an embodiment, the search result UI 1940 may include an input object 1944 inquiring whether to restart BIS reception. In an embodiment, the electronic device 101 may transmit, to the external electronic device (e.g., the first electronic device 202), second synchronization information obtained from the EA data of the selected BIS source (e.g., the source electronic device 404) based on receiving a user input (e.g., a touch) through the input object 1944 in a state in which any one BIS source (e.g., "BIS1") is selected through the broadcast channel list 1942.

Referring to FIG. 19E, the electronic device 101 may display, through the display module, an add device UI 1950 based on discovery of the first external electronic device (e.g., the second electronic device 204) in a state in which the external electronic device (e.g., the first electronic device 202) is synchronized with the source electronic device 400. In an embodiment, the add device UI 1950 may include broadcast service information(e.g., broadcast service name "BIS1") related to the source electronic device 400 and/or the device name (e.g., "Buds_11 (R)") of the first external electronic device (e.g., the second electronic device 204). The add device UI 1950 may include at least one of a notification icon, a pop-up notification, and a guide message window in the upper bar displayed through the display module 160 of the electronic device 101.

In an embodiment, the add device UI 1910 may include an input object 1952 inquiring whether to continue BIS reception on the first external electronic device (e.g., the second electronic device 204). In an embodiment, the electronic device 101 may transmit, to the first external electronic device (e.g., the second electronic device 204), second synchronization information obtained from the EA data from the source electronic device 400 based on receiving a user input (e.g., a touch) through the input object 1952 of the add device UI 1950.

An electronic device 101 according to an embodiment of the disclosure may comprise a communication circuit 190, at least one processor 120, and memory 130 storing instructions. The instructions may, when executed by the at least one processor individually or collectively, cause the electronic device to: establish, through the communication circuitry, a first communication link (404) with an external electronic device. The instructions may, when executed by the at least one processor individually or collectively, cause the electronic device to: transmit, to the external electronic device via the first communication link, first synchronization information for broadcast isochronous stream (BIS) synchronization to a source electronic device. The instructions may, when executed by the at least one processor individually or collectively, cause the electronic device to: determining that the BIS synchronization is terminated at the external electronic device synchronized with the source electronic device. The instructions may, when executed by the at least one processor individually or collectively, cause the electronic device to: based on the BIS synchronization being terminated at the external electronic device, perform, through the communication circuitry, scanning for receiving extended advertising (EA) data of the source electronic device. The instructions may, when executed by the at least one processor individually or collectively, cause the electronic device to: transmit, to the external electronic device via the first communication link, second synchronization information for the source electronic device obtained from the EA data, such that the external electronic device synchronizes with the source electronic device.

In an embodiment, the instructions may, when executed by the at least one processor individually or collectively, cause the electronic device to: based on receiving synchronization termination information indicating that the BIS synchronization to the source electronic device is terminated from the external electronic device, identifying that the first communication link with the external electronic device is disconnected, or identifying that the electronic device fails to receive periodic advertising data from the source electronic device, determine that the BIS synchronization is terminated at the external electronic device.

In an embodiment, the instructions may, when executed by the at least one processor individually or collectively, cause the electronic device to: based on the BIS synchronization being terminated at the external electronic device, display, through a display module 160, a synchronization termination user interface (UI) 1910 indicating that the BIS synchronization is terminated at the external electronic device. The synchronization termination UI may comprise an input object (1912) for receiving a user input requesting to perform the scanning.

In an embodiment, the instructions may, when executed by the at least one processor individually or collectively, cause the electronic device to: display, through the display module (160), a searching UI (1920) indicating that the scanning is being performed while performing the scanning. The scanning may comprise monitoring reception of the EA data from the source electronic device.

In an embodiment, the instructions may, when executed by the at least one processor individually or collectively, cause the electronic device to: based on receiving the EA data via the scanning, display, through the display module (160), a search result UI (1930) indicating that the BIS synchronization to the source electronic device is possible. The search result UI may comprise an input object (1932) for receiving a user input requesting to synchronize the external electronic device to the source electronic device.

In an embodiment, the instructions may, when executed by the at least one processor individually or collectively, cause the electronic device to: based on receiving the EA data via the scanning, display, through the display module (160), a first search result UI (1940) indicating that the BIS synchronization to the source electronic device is possible and including a broadcast channel list (1942) indicating one or more source electronic devices discovered by the scanning, the broadcast channel list comprising an item corresponding to the source electronic device and highlight the item corresponding to the source electronic device when displaying the broadcast channel list.

In an embodiment, the instructions may, when executed by the at least one processor individually or collectively, cause the electronic device to: based on the BIS synchronization being terminated at the external electronic device, perform the scanning via a plurality of advertising channels available for transmission of the EA data.

An electronic device 101 according to an embodiment may comprise a communication circuit 190, a processor 120, and memory 130 storing instructions. The instructions may, when executed by the at least one processor individually or collectively, cause the electronic device to: establish, through the communication circuitry, a first communication link (404) with an external electronic device. The instructions, when individually or collectively executed by the at least one processor, may cause the electronic device to transmit first synchronization information for broadcast isochronous stream (BIS) synchronization to the source electronic device to the external electronic device via the first communication link. The instructions may, when executed by the at least one processor individually or collectively, cause the electronic device to: identify disconnection of the first communication link. The instructions may, when executed by the at least one processor individually or collectively, cause the electronic device to: based on the disconnection of the first communication link, perform, through the communication circuitry, scanning for receiving extended advertising (EA) data of the source electronic device. The instructions may, when executed by the at least one processor individually or collectively, cause the electronic device to: identify reconnection of the first communication link. The instructions may, when executed by the at least one processor individually or collectively, cause the electronic device to: based on the reconnection of the first communication link, transmit, to the external electronic device via the reconnected first communication link, second synchronization information for the source electronic device obtained from the EA data, such that the external electronic device synchronizes with the source electronic device.

In an embodiment, the instructions may, when executed by the at least one processor individually or collectively, cause the electronic device to: based on the disconnection of the first communication link, display, through a display module 160, a synchronization termination user interface (UI) 1910 indicating that the BIS synchronization is terminated at the external electronic device. The synchronization termination UI may comprise an input object (1912) for receiving a user input requesting to perform the scanning.

In an embodiment, the instructions may, when executed by the at least one processor individually or collectively, cause the electronic device to: based on receiving the EA data via the scanning, display, through the display module 160, a search result UI 1930 indicating that the BIS synchronization to the source electronic device 400 is possible. The search result UI may comprise an input object (1932) for receiving a user input requesting to synchronize the external electronic device to the source electronic device.

A method by an electronic device 101 according to an embodiment may comprise establishing (1002) a first communication link 404 with an external electronic device 202. The method may comprise transmitting (1004.1006), to the external electronic device via the first communication link, first synchronization information for broadcast isochronous stream (BIS) synchronization to a source electronic device. The method may comprise determining (1008) that the BIS synchronization is terminated at the external electronic device synchronized with the source electronic device. The method may comprise, based on the BIS synchronization being terminated at the external electronic device, performing (1010) scanning for receiving extended advertising (EA) data of the source electronic device. The method may comprise transmitting (1012), to the external electronic device via the first communication link, second synchronization information for the source electronic device obtained from the EA data, such that the external electronic device synchronizes with the source electronic device.

In an embodiment, the determining may include at least one of receiving (1104) synchronization termination information indicating that the BIS synchronization to the source electronic device is terminated from the external electronic device, identifying (1106) that the first communication link with the external electronic device is disconnected, or identifying (1108) that the electronic device fails to receive periodic advertising data from the source electronic device.

In an embodiment, the method may comprise, based on the BIS synchronization being terminated at the external electronic device, displaying 1204, through a display module 160, a synchronization termination user interface (UI) 1910 indicating that the BIS synchronization is terminated at the external electronic device, The synchronization termination UI may comprise an input object 1912 for receiving a user input requesting to perform the scanning.

In an embodiment, the method may comprise displaying (1208), through the display module 160, a searching UI 1920 indicating that the scanning is being performed while performing the scanning. The scanning may comprise monitoring reception of the extended advertising (EA) data from the source electronic device.

In an embodiment, the method may comprise, based on receiving the EA data via the scanning, displaying (1212), through the display module 160, a search result UI 1930 indicating that the BIS synchronization to the source electronic device is possible. The search result UI may comprise an input object 1932 for receiving a user input requesting to synchronize the external electronic device to the source electronic device.

In an embodiment, the method may comprise, based on receiving the EA data via the scanning, displaying, through the display module 160, a first search result UI 1940 indicating that the BIS synchronization to the source electronic device is possible and including a broadcast channel list 1942 indicating one or more source electronic devices discovered by the scanning, the broadcast channel list comprising an item corresponding to the source electronic device and highlighting the item corresponding to the source electronic device when displaying the broadcast channel list.

In an embodiment, performing the scanning may include, based on the BIS synchronization being terminated at the external electronic device, performing the scanning via a plurality of advertising channels available for transmission of the EA data.

A method by an electronic device 101 according to an embodiment may comprise establishing a first communication link 404 with an external electronic device 202. The method may comprise transmitting (1402), to the external electronic device via the first communication link, first synchronization information for broadcast isochronous stream (BIS) synchronization to a source electronic device. The method may comprise identifying (1404) disconnection of the first communication link. The method may comprise, based on the disconnection of the first communication link, performing (1406) scanning for receiving extended advertising (EA) data of the source electronic device. The method may comprise identifying (1408) reconnection of the first communication link. The method may comprise, based on the reconnection of the first communication link, transmitting (1414), to the external electronic device via the reconnected first communication link, second synchronization information for the source electronic device obtained from the EA data, such that the external electronic device synchronizes with the source electronic device.

In an embodiment, the method may comprise displaying, through the display module 160, a search result UI 1930 indicating that BIS synchronization to the source electronic device 400 is possible based on obtaining the second synchronization information. The search result UI may comprise an input object 1932 for receiving a user input requesting to synchronize the external electronic device to the source electronic device.

In a non-transitory computer-readable storage medium storing one or more programs, according to an embodiment, the one or more programs may include instructions configured to, when executed by at least one processor 120 of an electronic device 101, cause the electronic device to: establish a first communication link 404 with an external electronic device 202, transmit, to the external electronic device via the first communication link, first synchronization information for BIS synchronization to a source electronic device, determine that the BIS synchronization is terminated at the external electronic device synchronized with the source electronic device, based on the BIS synchronization being terminated at the external electronic device, perform scanning for receiving extended advertising (EA) data of the source electronic device, and transmit, to the external electronic device via the first communication link, second synchronization information for the source electronic device obtained from the EA data, such that the external electronic device synchronizes with the source electronic device.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., the memory 390, internal memory 136 or external memory 138) that is readable by a machine (e.g., the electronic device 202 or 204 or the electronic device 101). For example, a processor (e.g., the processor 310 or processor 120) of the machine (e.g., the electronic device 202 or 204 or electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
communication circuitry (190);
at least one processor (120); and
memory (130) storing instructions, wherein the instructions, when executed by the at least one processor individually or collectively, cause the electronic device to:
establish, through the communication circuitry, a first communication link (404) with an external electronic device (202);
transmit, to the external electronic device via the first communication link, first synchronization information for broadcast isochronous stream, BIS, synchronization to a source electronic device (400);
determine that the BIS synchronization is terminated at the external electronic device synchronized with the source electronic device;
**characterized in that** the instructions, when executed by the at least one processor individually or collectively, further cause the electronic device to:
based on the BIS synchronization being terminated at the external electronic device, perform, through the communication circuitry, scanning for receiving extended advertising, EA, data of the source electronic device; and
transmit, to the external electronic device via the first communication link, second synchronization information for the source electronic device obtained from the EA data, such that the external electronic device synchronizes with the source electronic device.

2. The electronic device of claim 1, wherein the instructions, when executed by the at least one processor individually or collectively, cause the electronic device to, based on:
receiving synchronization termination information indicating that the BIS synchronization to the source electronic device is terminated from the external electronic device;
identifying that the first communication link with the external electronic device is disconnected; or
identifying that the electronic device fails to receive periodic advertising, PA, data from the source electronic device,
determine that the BIS synchronization is terminated at the external electronic device.

3. The electronic device of claim 1 or 2, wherein the instructions, when executed by the at least one processor individually or collectively, cause the electronic device to:
based on the BIS synchronization being terminated at the external electronic device, display, through a display module (160), a synchronization termination user interface, UI, (1910) indicating that the BIS synchronization is terminated at the external electronic device, and
wherein the synchronization termination UI comprises an input object (1912) for receiving a user input requesting to perform the scanning.

4. The electronic device of any one of claims 1 to 3, wherein the instructions, when executed by the at least one processor individually or collectively, cause the electronic device to:
display, through the display module (160), a searching UI (1920) indicating that the scanning is being performed while performing the scanning, and
wherein the scanning comprises monitoring reception of the EA data from the source electronic device.

5. The electronic device of any one of claims 1 to 4, wherein the instructions, when executed by the at least one processor individually or collectively, cause the electronic device to:
based on receiving the EA data via the scanning, display, through the display module (160), a search result UI (1930) indicating that the BIS synchronization to the source electronic device is possible, and
wherein the search result UI comprises an input object (1932) for receiving a user input requesting to synchronize the external electronic device to the source electronic device.

6. The electronic device of any one of claims 1 to 5, wherein the instructions, when executed by the at least one processor individually or collectively, cause the electronic device to:
based on receiving the EA data via the scanning, display, through the display module (160), a first search result UI (1940) indicating that the BIS synchronization to the source electronic device is possible and including a broadcast channel list (1942) indicating one or more source electronic devices discovered by the scanning, the broadcast channel list comprising an item corresponding to the source electronic device; and
highlight the item corresponding to the source electronic device when displaying the broadcast channel list.

7. The electronic device of any one of claims 1 to 6, wherein the instructions, when executed by the at least one processor individually or collectively, cause the electronic device to:
based on the BIS synchronization being terminated at the external electronic device, perform the scanning via a plurality of advertising channels available for transmission of the EA data.

8. An electronic device (101) comprising:
communication circuitry (190);
at least one processor (120); and
memory (130) storing instructions, wherein the instructions, when executed by the at least one processor individually or collectively, cause the electronic device to:
establish, through the communication circuitry, a first communication link (404) with an external electronic device (202);
transmit, to the external electronic device via the first communication link, first synchronization information for broadcast isochronous stream, BIS, synchronization to a source electronic device (400);
identify disconnection of the first communication link;
**characterized in that** the instructions, when executed by the at least one processor individually or collectively, further cause the electronic device to:
based on the disconnection of the first communication link, perform, through the communication circuitry, scanning for receiving extended advertising, EA, data of the source electronic device;
identify reconnection of the first communication link; and
based on the reconnection of the first communication link, transmit, to the external electronic device via the reconnected first communication link, second synchronization information for the source electronic device obtained from the EA data, such that the external electronic device synchronizes with the source electronic device.

9. The electronic device of claim 8, wherein the instructions, when executed by the at least one processor individually or collectively, cause the electronic device to:
based on the disconnection of the first communication link, display, through a display module (160), a synchronization termination user interface, UI, (1910) indicating that the BIS synchronization is terminated at the external electronic device,
wherein the synchronization termination UI comprises an input object (1912) for receiving a user input requesting to perform the scanning.

10. The electronic device of claim 8 or 9, wherein the instructions, when executed by the at least one processor individually or collectively, cause the electronic device to:
based on receiving the EA data via the scanning, display, through the display module (160), a search result UI (1930) indicating that the BIS synchronization to the source electronic device (400) is possible, and
wherein the search result UI comprises an input object (1932) for receiving a user input requesting to synchronize the external electronic device to the source electronic device.

11. A method by an electronic device (101), the method comprising:
establishing (1002) a first communication link (404) with an external electronic device (202);
transmitting (1004, 1006), to the external electronic device via the first communication link, first synchronization information for broadcast isochronous stream, BIS, synchronization to a source electronic device (400);
determining (1008) that the BIS synchronization is terminated at the external electronic device synchronized with the source electronic device;
**characterized in that** the method further comprises:
based on the BIS synchronization being terminated at the external electronic device. performing (1010) scanning for receiving extended advertising, EA, data of the source electronic device; and
transmitting (1012), to the external electronic device via the first communication link, second synchronization information for the source electronic device obtained from the EA data, such that the external electronic device synchronizes with the source electronic device.

12. The method of claim 11, wherein the determining includes at least one of:
receiving (1104) synchronization termination information indicating that the BIS synchronization to the source electronic device is terminated from the external electronic device;
identifying (1106) that the first communication link with the external electronic device is disconnected; or
identifying (1108) that the electronic device fails to receive periodic advertising, PA, data from the source electronic device.

13. The method of claim 11 or 12, further comprising:
based on the BIS synchronization being terminated at the external electronic device, displaying (1204), through a display module (160), a synchronization termination user interface, UI, (1910) indicating that the BIS synchronization is terminated at the external electronic device,
wherein the synchronization termination UI comprises an input object (1912) for receiving a user input requesting to perform the scanning.

14. The method of any one of claims 11 to 13, further comprising:
displaying (1208), through the display module (160), a searching UI (1920) indicating that the scanning is being performed while performing the scanning,
wherein the scanning comprises monitoring reception of the extended advertising, EA, data from the source electronic device.

15. A non-transitory computer-readable storage medium storing instructions which, when executed by at least one processor of an electronic device (101), cause the electronic device (101) to perform the method of any one of claims 11 to 14.

## Patentansprüche

1. Elektronische Vorrichtung (101), umfassend:
Kommunikationsschaltung (190);
mindestens einen Prozessor (120); und
Speicher (130), der Anweisungen speichert, wobei die Anweisungen, wenn sie durch den mindestens einen Prozessor einzeln oder gemeinsam ausgeführt werden, die elektronische Vorrichtung zu Folgendem veranlassen:
Herstellen, durch die Kommunikationsschaltung, einer ersten Kommunikationsverbindung (404) mit einer externen elektronischen Vorrichtung (202);
Übertragen, an die externe elektronische Vorrichtung über die erste Kommunikationsverbindung, von ersten Synchronisationsinformationen für eine isochrone Broadcast-Stream-Synchronisation, BIS-Synchronisation, auf eine elektronische Quellvorrichtung (400);
Bestimmen, dass die BIS-Synchronisation an der externen elektronischen Vorrichtung, die mit der elektronischen Quellvorrichtung synchronisiert ist, beendet wird;
**dadurch gekennzeichnet, dass** die Anweisungen, wenn sie durch den mindestens einen Prozessor einzeln oder gemeinsam ausgeführt werden, die elektronische Vorrichtung ferner zu Folgendem veranlassen:
basierend darauf, dass die BIS-Synchronisation an der externen elektronischen Vorrichtung beendet wird, Durchführen, durch die Kommunikationsschaltung, eines Scannens zum Empfangen von erweiterten Werbedaten, EA-Daten, der elektronischen Quellvorrichtung; und
Übertragen, an die externe elektronische Vorrichtung über die erste Kommunikationsverbindung, von zweiten Synchronisationsinformationen für die elektronische Quellvorrichtung, die aus den EA-Daten erhalten werden, sodass sich die externe elektronische Vorrichtung mit der elektronischen Quellvorrichtung synchronisiert.

2. Elektronische Vorrichtung nach Anspruch 1, wobei die Anweisungen, wenn sie durch den mindestens einen Prozessor einzeln oder gemeinsam ausgeführt werden, die elektronische Vorrichtung zu Folgendem veranlassen, basierend auf dem:
Empfangen von Synchronisationsbeendigungsinformationen, die angeben, dass die BIS-Synchronisation auf die elektronische Quellvorrichtung beendet wird, von der externen elektronischen Vorrichtung;
Feststellen, dass die erste Kommunikationsverbindung mit der externen elektronischen Vorrichtung getrennt ist; oder
Feststellen, dass die elektronische Vorrichtung keine periodischen Werbedaten, PA-Daten, von der elektronischen Quellvorrichtung empfängt,
Bestimmen, dass die BIS-Synchronisation an der externen elektronischen Vorrichtung beendet wird.

3. Elektronische Vorrichtung nach Anspruch 1 oder 2, wobei die Anweisungen, wenn sie durch den mindestens einen Prozessor einzeln oder gemeinsam ausgeführt werden, die elektronische Vorrichtung zu Folgendem veranlassen:
basierend darauf, dass die BIS-Synchronisation an der externen elektronischen Vorrichtung beendet wird, Anzeigen, durch ein Anzeigemodul (160), einer Synchronisationsbeendigungs-Benutzeroberfläche, UI, (1910), die angibt, dass die BIS-Synchronisation an der externen elektronischen Vorrichtung beendet wird, und
wobei die Synchronisationsbeendigungs-UI ein Eingabeobjekt (1912) zum Empfangen einer Benutzereingabe umfasst, die anfordert, das Scannen durchzuführen.

4. Elektronische Vorrichtung nach einem der Ansprüche 1 bis 3, wobei die Anweisungen, wenn sie durch den mindestens einen Prozessor einzeln oder gemeinsam ausgeführt werden, die elektronische Vorrichtung zu Folgendem veranlassen:
Anzeigen, durch das Anzeigemodul (160), einer Such-UI (1920), die angibt, dass das Scannen durchgeführt wird, während das Scannen durchgeführt wird, und
wobei das Scannen das Überwachen eines Empfangs der EA-Daten von der elektronischen Quellvorrichtung umfasst.

5. Elektronische Vorrichtung nach einem der Ansprüche 1 bis 4, wobei die Anweisungen, wenn sie durch den mindestens einen Prozessor einzeln oder gemeinsam ausgeführt werden, die elektronische Vorrichtung zu Folgendem veranlassen:
basierend auf dem Empfangen der EA-Daten über das Scannen, Anzeigen, durch das Anzeigemodul (160), einer Suchergebnis-UI (1930), die angibt, dass die BIS-Synchronisation auf die elektronische Quellvorrichtung möglich ist, und
wobei die Suchergebnis-UI ein Eingabeobjekt (1932) zum Empfangen einer Benutzereingabe umfasst, die anfordert, die externe elektronische Vorrichtung mit der elektronischen Quellvorrichtung zu synchronisieren.

6. Elektronische Vorrichtung nach einem der Ansprüche 1 bis 5, wobei die Anweisungen, wenn sie durch den mindestens einen Prozessor einzeln oder gemeinsam ausgeführt werden, die elektronische Vorrichtung zu Folgendem veranlassen:
basierend auf dem Empfangen der EA-Daten über das Scannen, Anzeigen, durch das Anzeigemodul (160), einer ersten Suchergebnis-UI (1940), die angibt, dass die BIS-Synchronisation auf die elektronische Quellvorrichtung möglich ist, und eine Broadcast-Kanalliste (1942) beinhaltet, die eine oder mehrere elektronische Quellvorrichtungen angibt, die durch das Scannen entdeckt wurden, wobei die Broadcast-Kanalliste ein Element umfasst, das der elektronischen Quellvorrichtung entspricht; und
Hervorheben des Elements, das der elektronischen Quellvorrichtung entspricht, wenn die Broadcast-Kanalliste anzeigt wird.

7. Elektronische Vorrichtung nach einem der Ansprüche 1 bis 6, wobei die Anweisungen, wenn sie durch den mindestens einen Prozessor einzeln oder gemeinsam ausgeführt werden, die elektronische Vorrichtung zu Folgendem veranlassen:
basierend darauf, dass die BIS-Synchronisation an der externen elektronischen Vorrichtung beendet wird, Durchführen des Scannens über eine Vielzahl von Werbekanälen, die zur Übertragung der EA-Daten verfügbar sind.

8. Elektronische Vorrichtung (101), umfassend:
Kommunikationsschaltung (190);
mindestens einen Prozessor (120); und
Speicher (130), der Anweisungen speichert, wobei die Anweisungen, wenn sie durch den mindestens einen Prozessor einzeln oder gemeinsam ausgeführt werden, die elektronische Vorrichtung zu Folgendem veranlassen:
Herstellen, durch die Kommunikationsschaltung, einer ersten Kommunikationsverbindung (404) mit einer externen elektronischen Vorrichtung (202);
Übertragen, an die externe elektronische Vorrichtung über die erste Kommunikationsverbindung, von ersten Synchronisationsinformationen für eine isochrone Broadcast-Stream-Synchronisation, BIS-Synchronisation, auf eine elektronische Quellvorrichtung (400);
Feststellen einer Trennung der ersten Kommunikationsverbindung;
**dadurch gekennzeichnet, dass** die Anweisungen, wenn sie durch den mindestens einen Prozessor einzeln oder gemeinsam ausgeführt werden, die elektronische Vorrichtung ferner zu Folgendem veranlassen:
basierend auf der Trennung der ersten Kommunikationsverbindung, Durchführen, durch die Kommunikationsschaltung, eines Scannens zum Empfangen von erweiterten Werbedaten, EA-Daten, der elektronischen Quellvorrichtung;
Feststellen einer Wiederverbindung der ersten Kommunikationsverbindung; und
basierend auf dem Wiederverbinden der ersten Kommunikationsverbindung, Übertragen, an die externe elektronische Vorrichtung über die wiederverbundene erste Kommunikationsverbindung, von zweiten Synchronisationsinformationen für die elektronische Quellvorrichtung, die aus den EA-Daten erhalten werden, sodass sich die externe elektronische Vorrichtung mit der elektronischen Quellvorrichtung synchronisiert.

9. Elektronische Vorrichtung nach Anspruch 8, wobei die Anweisungen, wenn sie durch den mindestens einen Prozessor einzeln oder gemeinsam ausgeführt werden, die elektronische Vorrichtung zu Folgendem veranlassen:
basierend auf der Trennung der ersten Kommunikationsverbindung, Anzeigen, durch ein Anzeigemodul (160), einer Synchronisationsbeendigungs-Benutzeroberfläche, UI, (1910), die angibt, dass die BIS-Synchronisation an der externen elektronischen Vorrichtung beendet wird, wobei die Synchronisationsbeendigungs-UI ein Eingabeobjekt (1912) zum Empfangen einer Benutzereingabe umfasst, die anfordert, das Scannen durchzuführen.

10. Elektronische Vorrichtung nach Anspruch 8 oder 9, wobei die Anweisungen, wenn sie durch den mindestens einen Prozessor einzeln oder gemeinsam ausgeführt werden, die elektronische Vorrichtung zu Folgendem veranlassen:
basierend auf dem Empfangen der EA-Daten über das Scannen, Anzeigen, durch das Anzeigemodul (160), einer Suchergebnis-UI (1930), die angibt, dass die BIS-Synchronisation auf die elektronische Quellvorrichtung (400) möglich ist, und
wobei die Suchergebnis-UI ein Eingabeobjekt (1932) zum Empfangen einer Benutzereingabe umfasst, die anfordert, die externe elektronische Vorrichtung mit der elektronischen Quellvorrichtung zu synchronisieren.

11. Verfahren durch eine elektronische Vorrichtung (101), wobei das Verfahren Folgendes umfasst:
Herstellen (1002) einer ersten Kommunikationsverbindung (404) mit einer externen elektronischen Vorrichtung (202);
Übertragen (1004, 1006), an die externe elektronische Vorrichtung über die erste Kommunikationsverbindung, von ersten Synchronisationsinformationen für eine isochrone Broadcast-Stream-Synchronisation, BIS-Synchronisation, auf eine elektronische Quellvorrichtung (400);
Bestimmen (1008), dass die BIS-Synchronisation an der externen elektronischen Vorrichtung, die mit der elektronischen Quellvorrichtung synchronisiert ist, beendet wird;
**dadurch gekennzeichnet, dass** das Verfahren ferner Folgendes umfasst:
basierend darauf, dass die BIS-Synchronisation an der externen elektronischen Vorrichtung beendet wird, Durchführen (1010) eines Scannens zum Empfangen von erweiterten Werbedaten, EA-Daten, der elektronischen Quellvorrichtung; und
Übertragen (1012), an die externe elektronische Vorrichtung über die erste Kommunikationsverbindung, von zweiten Synchronisationsinformationen für die elektronische Quellvorrichtung, die aus den EA-Daten erhalten werden, sodass sich die externe elektronische Vorrichtung mit der elektronischen Quellvorrichtung synchronisiert.

12. Verfahren nach Anspruch 11, wobei das Bestimmen mindestens eines von Folgenden beinhaltet:
Empfangen (1104) von Synchronisationsbeendigungsinformationen, die angeben, dass die BIS-Synchronisation auf die elektronische Quellvorrichtung beendet wird, von der externen elektronischen Vorrichtung;
Feststellen (1106), dass die erste Kommunikationsverbindung mit der externen elektronischen Vorrichtung getrennt ist; oder
Feststellen (1108), dass die elektronische Vorrichtung keine periodischen Werbedaten, PA-Daten, von der elektronischen Quellvorrichtung empfängt.

13. Verfahren nach Anspruch 11 oder 12, ferner umfassend:
basierend darauf, dass die BIS-Synchronisation an der externen elektronischen Vorrichtung beendet wird, Anzeigen (1204), durch ein Anzeigemodul (160), einer Synchronisationsbeendigungs-Benutzeroberfläche, UI, (1910), die angibt, dass die BIS-Synchronisation an der externen elektronischen Vorrichtung beendet wird,
wobei die Synchronisationsbeendigungs-UI ein Eingabeobjekt (1912) zum Empfangen einer Benutzereingabe umfasst, die anfordert, das Scannen durchzuführen.

14. Verfahren nach einem der Ansprüche 11 bis 13, ferner umfassend:
Anzeigen (1208), durch das Anzeigemodul (160), einer Such-UI (1920), die angibt, dass das Scannen durchgeführt wird, während das Scannen durchgeführt wird,
wobei das Scannen das Überwachen eines Empfangs der erweiterten Werbedaten, EA-Daten, von der elektronischen Quellvorrichtung umfasst.

15. Nichtflüchtiges computerlesbares Speichermedium, das Anweisungen speichert, die, wenn sie durch mindestens einen Prozessor einer elektronischen Vorrichtung (101) ausgeführt werden, die elektronische Vorrichtung (101) dazu veranlassen, das Verfahren nach einem der Ansprüche 11 bis 14 durchzuführen.

## Revendications

1. Dispositif électronique (101) comprenant :
des circuits de communication (190) ;
au moins un processeur (120) ; et
une mémoire (130) stockant des instructions, dans lequel les instructions, lorsqu'elles sont exécutées individuellement et/ou collectivement par l'au moins un processeur, amènent le dispositif électronique à :
établir, par l'intermédiaire des circuits de communication, une première liaison de communication (404) avec un dispositif électronique externe (202) ;
transmettre, au dispositif électronique externe via la première liaison de communication, des premières informations de synchronisation pour une synchronisation de flux isochrone de diffusion, BIS, à un dispositif électronique source (400) ;
déterminer que la synchronisation BIS est terminée au niveau du dispositif électronique externe synchronisé avec le dispositif électronique source ;
**caractérisé en ce que** les instructions, lorsqu'elles sont exécutées individuellement ou collectivement par l'au moins un processeur, amènent en outre le dispositif électronique à :
sur la base du fait que la synchronisation BIS soit terminée au niveau du dispositif électronique externe, effectuer, par l'intermédiaire des circuits de communication, un balayage pour recevoir des données de publicité étendue, EA, du dispositif électronique source ; et
transmettre, au dispositif électronique externe via la première liaison de communication, des deuxièmes informations de synchronisation pour le dispositif électronique source obtenues à partir des données EA, de sorte que le dispositif électronique externe se synchronise avec le dispositif électronique source.

2. Dispositif électronique selon la revendication 1, dans lequel les instructions, lorsqu'elles sont exécutées individuellement ou collectivement par l'au moins un processeur, amènent le dispositif électronique à, sur la base de :
la réception d'informations de fin de synchronisation indiquant que la synchronisation BIS avec le dispositif électronique source est terminée en provenance du dispositif électronique externe ;
l'identification que la première liaison de communication avec le dispositif électronique externe est déconnectée ; ou
l'identification que le dispositif électronique ne reçoit pas de données de publicité périodique, PA, en provenance du dispositif électronique source,
déterminer que la synchronisation BIS est terminée au niveau du dispositif électronique externe.

3. Dispositif électronique selon la revendication 1 ou 2, dans lequel les instructions, lorsqu'elles sont exécutées individuellement ou collectivement par l'au moins un processeur, amènent le dispositif électronique à :
sur la base du fait que la synchronisation BIS soit terminée au niveau du dispositif électronique externe, afficher, par l'intermédiaire d'un module d'affichage (160), une interface utilisateur, UI, de fin de synchronisation (1910) indiquant que la synchronisation BIS est terminée au niveau du dispositif électronique externe, et
dans lequel l'UI de fin de synchronisation comprend un objet d'entrée (1912) permettant de recevoir une entrée utilisateur demandant d'effectuer le balayage.

4. Dispositif électronique selon l'une quelconque des revendications 1 à 3, dans lequel les instructions, lorsqu'elles sont exécutées individuellement ou collectivement par l'au moins un processeur, amènent le dispositif électronique à :
afficher, par l'intermédiaire du module d'affichage (160), une UI de recherche (1920) indiquant que le balayage est en cours d'exécution tout en effectuant le balayage, et
dans lequel le balayage comprend la surveillance de la réception des données EA provenant du dispositif électronique source.

5. Dispositif électronique selon l'une quelconque des revendications 1 à 4, dans lequel les instructions, lorsqu'elles sont exécutées individuellement ou collectivement par l'au moins un processeur, amènent le dispositif électronique à :
sur la base de la réception des données EA via le balayage, afficher, par l'intermédiaire du module d'affichage (160), une UI de résultat de recherche (1930) indiquant que la synchronisation BIS avec le dispositif électronique source est possible, et
dans lequel l'UI de résultat de recherche comprend un objet d'entrée (1932) permettant de recevoir une entrée utilisateur demandant de synchroniser le dispositif électronique externe avec le dispositif électronique source.

6. Dispositif électronique selon l'une quelconque des revendications 1 à 5, dans lequel les instructions, lorsqu'elles sont exécutées individuellement ou collectivement par l'au moins un processeur, amènent le dispositif électronique à :
sur la base de la réception des données EA via le balayage, afficher, par l'intermédiaire du module d'affichage (160), une première UI de résultat de recherche (1940) indiquant que la synchronisation BIS avec le dispositif électronique source est possible et comprenant une liste de canaux de diffusion (1942) indiquant un ou plusieurs dispositifs électroniques sources découverts par le balayage, la liste de canaux de diffusion comprenant un élément correspondant au dispositif électronique source ; et
mettre en surbrillance l'élément correspondant au dispositif électronique source lors de l'affichage de la liste des canaux de diffusion.

7. Dispositif électronique selon l'une quelconque des revendications 1 à 6, dans lequel les instructions, lorsqu'elles sont exécutées individuellement ou collectivement par l'au moins un processeur, amènent le dispositif électronique à :
sur la base du fait que la synchronisation BIS soit terminée au niveau du dispositif électronique externe, effectuer le balayage via une pluralité de canaux publicitaires disponibles pour la transmission des données EA.

8. Dispositif électronique (101) comprenant :
des circuits de communication (190) ;
au moins un processeur (120) ; et
une mémoire (130) stockant des instructions, dans lequel les instructions, lorsqu'elles sont exécutées individuellement ou collectivement par l'au moins un processeur, amènent le dispositif électronique à :
établir, par l'intermédiaire des circuits de communication, une première liaison de communication (404) avec un dispositif électronique externe (202) ;
transmettre, au dispositif électronique externe via la première liaison de communication, des premières informations de synchronisation pour une synchronisation de flux isochrone de diffusion, BIS, à un dispositif électronique source (400) ;
identifier la déconnexion de la première liaison de communication ;
**caractérisé en ce que** les instructions, lorsqu'elles sont exécutées individuellement ou collectivement par l'au moins un processeur, amènent en outre le dispositif électronique à :
sur la base de la déconnexion de la première liaison de communication, effectuer, par l'intermédiaire des circuits de communication, un balayage pour recevoir des données de publicité étendue, EA, du dispositif électronique source ;
identifier la reconnexion de la première liaison de communication ; et
sur la base de la reconnexion de la première liaison de communication, transmettre, au dispositif électronique externe via la première liaison de communication reconnectée, des deuxièmes informations de synchronisation pour le dispositif électronique source obtenues à partir des données EA, de sorte que le dispositif électronique externe se synchronise avec le dispositif électronique source.

9. Dispositif électronique selon la revendication 8, dans lequel les instructions, lorsqu'elles sont exécutées individuellement ou collectivement par l'au moins un processeur, amènent le dispositif électronique à :
sur la base de la déconnexion de la première liaison de communication, afficher, par l'intermédiaire d'un module d'affichage (160), une interface utilisateur, UI, de fin de synchronisation (1910) indiquant que la synchronisation BIS est terminée au niveau du dispositif électronique externe, dans lequel l'UI de fin de synchronisation comprend un objet d'entrée (1912) permettant de recevoir une entrée utilisateur demandant d'effectuer le balayage.

10. Dispositif électronique selon la revendication 8 ou 9, dans lequel les instructions, lorsqu'elles sont exécutées individuellement ou collectivement par l'au moins un processeur, amènent le dispositif électronique à :
sur la base de la réception des données EA via le balayage, afficher, par l'intermédiaire du module d'affichage (160), une UI de résultat de recherche (1930) indiquant que la synchronisation BIS avec le dispositif électronique source (400) est possible, et
dans lequel l'UI de résultat de recherche comprend un objet d'entrée (1932) permettant de recevoir une entrée utilisateur demandant de synchroniser le dispositif électronique externe avec le dispositif électronique source.

11. Procédé par un dispositif électronique (101), le procédé comprenant :
l'établissement (1002) d'une première liaison de communication (404) avec un dispositif électronique externe (202) ;
la transmission (1004, 1006), au dispositif électronique externe via la première liaison de communication, de premières informations de synchronisation pour une synchronisation de flux isochrone de diffusion, BIS, à un dispositif électronique source (400) ;
la détermination (1008) que la synchronisation BIS est terminée au niveau du dispositif électronique externe synchronisé avec le dispositif électronique source ;
**caractérisé en ce que** le procédé comprend en outre :
sur la base du fait que la synchronisation BIS soit terminée au niveau du dispositif électronique externe, la réalisation (1010) d'un balayage pour recevoir des données de publicité étendue, EA, du dispositif électronique source ; et
la transmission (1012), au dispositif électronique externe via la première liaison de communication, de deuxièmes informations de synchronisation pour le dispositif électronique source obtenues à partir des données EA, de sorte que le dispositif électronique externe se synchronise avec le dispositif électronique source.

12. Procédé selon la revendication 11, dans lequel la détermination comprend au moins l'une de :
la réception (1104) d'informations de fin de synchronisation indiquant que la synchronisation BIS avec le dispositif électronique source est terminée en provenance du dispositif électronique externe ;
l'identification (1106) que la première liaison de communication avec le dispositif électronique externe est déconnectée ; ou
l'identification (1108) que le dispositif électronique ne reçoit pas de données de publicité périodique, PA, en provenance du dispositif électronique source.

13. Procédé selon la revendication 11 ou 12, comprenant en outre :
sur la base du fait que la synchronisation BIS soit terminée au niveau du dispositif électronique externe, l'affichage (1204), par l'intermédiaire d'un module d'affichage (160), d'une interface utilisateur, UI, de fin de synchronisation (1910) indiquant que la synchronisation BIS est terminée au niveau du dispositif électronique externe, et
dans lequel l'UI de fin de synchronisation comprend un objet d'entrée (1912) permettant de recevoir une entrée utilisateur demandant d'effectuer le balayage.

14. Procédé selon l'une quelconque des revendications 11 à 13, comprenant en outre :
l'affichage (1208), par l'intermédiaire du module d'affichage (160), d'une UI de recherche (1920) indiquant que le balayage est en cours d'exécution tout en effectuant le balayage,
dans lequel le balayage comprend la surveillance de la réception des données de publicité étendue, EA, en provenance du dispositif électronique source.

15. Support de stockage lisible par ordinateur non transitoire stockant des instructions qui, lorsqu'elles sont exécutées par au moins un processeur d'un dispositif électronique (101), amènent le dispositif électronique (101) à réaliser le procédé selon l'une quelconque des revendications 11 à 14.
